(19) Europäisches Patentamt
European Patent Office
Office européen des brevets

(11) Publication number: 0 173 581 B1

# (12) EUROPEAN PATENT SPECIFICATION

(45) Date of publication of patent specification: 04.03.92

(51) Int. Cl.[5]: C09K 19/46, C09K 19/42, G02F 1/137

(21) Application number: 85306180.2

(22) Date of filing: 30.08.85

## (54) A phase transition-type liquid crystal composition.

(30) Priority: 31.08.84 JP 180633/84

(43) Date of publication of application:
05.03.86 Bulletin 86/10

(45) Publication of the grant of the patent:
04.03.92 Bulletin 92/10

(84) Designated Contracting States:
CH DE FR GB LI

(56) References cited:
EP-A- 0 035 155
EP-A- 0 058 512
US-A- 4 522 470

(73) Proprietor: FUJITSU LIMITED
1015, Kamikodanaka Nakahara-ku
Kawasaki-shi Kanagawa 211(JP)

(72) Inventor: Mochizuki, Akihiro
Rumieru Atsugi 305 2-1-6, Mizuhiki
Atsugi-shi Kanagawa 243(JP)
Inventor: Saito, Kazumasa
Dai-2 Copo Taguchi 202 1063, Kawaraguchi
Ebina-shi Kanagawa 243-04(JP)
Inventor: Watanuki, Tsuneo
Fujitsu Atsugi-ryo 2-3-10, Sakae-cho
Atsugi-shi Kanagawa 243(JP)
Inventor: Ikegami, Kasumi
41-25, Susukino-cho
Sagamihara-shi Kanagawa 229(JP)

(74) Representative: Lawrence, Peter Robin Broughton et al
GILL JENNINGS & EVERY 53-64 Chancery Lane
London WC2A 1HN(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to a phase transition-type liquid crystal composition. In particular, this invention relates to a cholesteric-nematic phase transition-type liquid crystal composition whose dielectric anisotropy is positive. Surprisingly, liquid crystal devices or elements produced using the liquid crystal composition of this invention can be effectively used in a keyboard input operation due to their fast writing capability, and provide large-scale or area display devices similar to those well-known in the art, such as cathode ray tube (CRT) display devices.

Various X-Y dot matrix-type liquid crystal display devices based on different display modes have been proposed and used for the display purposes. One of the conventional display modes is a dynamic scattering mode (DSM) utilizing dynamic scattering effects. Liquid crystal display devices based on DSM, however, cannot be used in large-scale displays. This is because, in such devices, cross-talk is undesirably caused with an increase of display area, namely, increase of scanning lines, and they have a lower cut-off frequency.

Another display mode, mainly used in the field of liquid crystal displays, is the twisted nematic (TN) mode utilizing twisted nematic effects. However, as in the DSM-type devices, the TN-type liquid crystal devices suffer from cross-talk when they are used in a large-scale dot matrix display, because their liquid crystal has no sudden rise characteristic. This means they are not suitable for large scale display. In addition to this, in a large-scale display, the TN-type devices suffer from a remarkably limited viewing angle and therefore an unacceptably decreased contrast. The narrowing of the viewing angle with an increase of the scanning lines is a critical drawback to a large-scale display and must be overcome.

Numerous researchers have made experiments and studies in order to overcome the drawbacks of the above-discussed DSM-type and TN-type display devices , and found a new type of liquid crystal display device, i.e., a storage-type liquid crystal device which is characterized by being capable of maintaining written information or a display in a storage state after one application of voltage and thereafter removal of the applied voltage (without further application of voltage) because of memory effects of the selected specific liquid crystals. This enables realization of a large-scale display on the order of 500 scanning lines. Such a large-scale display could not be attained with the conventional DSM-type and TN-type display devices of an X-Y dot matrix-type.

However, the storage-type liquid crystal display usually requires a driving voltage of ±20 V, an extremely high driving voltage for a liquid crystal display. When attempting to drive the storage-type liquid crystal display with a voltage in the range possible by a complementary metal oxide semiconductor (CMOS), even if writing is possible, almost no storage time is obtained, making use as a storage-type liquid crystal display element impossible.

For this reason, the above-mentioned storage-type liquid crystal display could not be driven by a CMOS integrated circuit (IC). Furthermore, while a large scale dot matrix display has been possible in principle, because mounting of a driving circuit was difficult, the storage-type liquid crystal display could not be utilized for actual display devices.

Japanese Unexamined Patent Publication (Kokai) No. 50-159294 proposed a matrix-type liquid crystal device based on a nematic-cholesteric mixed liquid crystal display system, which utilizes a Schiff-type cholesteric liquid crystal, for example, cholesteryl chloride. This type of liquid crystal device can overcome the problem of cross-talk discussed above and ensure an increased contrast in a large-scale display, but has the drawback that in the case of an X-Y matrix display drive, when the liquid crystal is transferred to a storage state after the completion of the writing of one picture, the entire picture becomes temporarily cloudy, e.g., for 10 seconds. The clouding of the entire picture means that the information on the display disappears, even if only temporarily, making the operator uneasy. Furthermore, when the written-in picture is partially rewritten, the rewritten part becomes temporarily cloudy in the same manner each time, making the rewriting operation longer.

Under these circumstances, we found an improved storage-type liquid crystal composition and an X-Y dot matrix-type liquid crystal display device using the liquid crystal composition. Japanese Unexamined Patent Publication (Kokai) No. 59-126492 and the equivalent U.S. Serial No. 558,475 filed December 6, 1983, provided a storage-type liquid crystal composition in which a nematic-cholesteric mixture liquid crystal exhibiting a positive anisotropy of dielectric constant is used. The composition comprises a cyclohexane-type liquid crystal having a high anisotropy of the dielectric constant ($\Delta\epsilon$) and a low viscosity ($\eta$), as a nematic liquid crystal; an azoxy-type liquid crystal having an abrupt rising property; and a compensated cholesteric liquid crystal having a large spiral pitch and a property of making the viscosity low when admixed with the nematic liquid crystal and/or the same type of liquid crystal having a property of making the viscosity low, such as cholesteryl oleate, as a cholesteric liquid crystal.

The storage-type liquid crystal composition we found is effective to overcome drawbacks of the above-discussed prior art liquid crystal compositions and devices. In fact, in this storage-type liquid crystal composition, the driving voltage is low, e.g., 7.0V to 4.4V, and no temporary clouding occurs. However, this liquid crystal composition is not satisfactory, since it can not provide a liquid crystal device having compatibility with a keyboard input system which is a conventional input manner in the field of display.

Recently, we found a more improved storage-type liquid crystal display device using a new driving method (cf., for example, Japanese Patent Application No. 59-107404, filed May 29, 1984). The liquid crystal display device, as is disclosed in the specification, uses as the liquid crystal material a liquid crystal composition comprising 10% to 90% by weight of cyanobiphenyl-type liquid crystal compound and 7% to 30% by weight of 4-cyano-4'-2-methylbutylbiphenyl-type liquid crystal compound. In this display device, two optical states, i.e., focal-conic or F state (cloudy state) and homeotropic or H' state (transparent state) can be produced and maintained with application of the same retention voltage. It has been found that this device is useful in a large size display and a keyboard input system, shows a high contrast display, and has no flicker. One drawback of this device is that stable homeotropic or H' state cannot be attained with application of the retention voltage. In fact, the H' state is metastable and therefore is changed to the focal-conic or F state after about 20 to 30 seconds. It is believed that such a change of state is caused because the atmospheric conditions such as humidity adversely affect the characteristics of the liquid crystal material. Another drawback is that the response speed of the device is relatively slow. It is therefore desirable to provide a novel liquid crystal composition having none of the drawbacks discussed above.

According to this invention, there is provided a liquid crystal composition which exhibits a positive dielectric anisotropy, and which is a cholesteric-nematic phase transition-type liquid crystal comprising a mixture of ester-type liquid crystal compound and chiral nematic liquid crystal compound having added thereto at least one bicyclohexane-type liquid crystal compound.

Unexpectedly, the described liquid crystal composition has an extended width or $\Delta V$ of the voltage hysteresis indicating two stable optical states (F and H') and a fast response speed and enables a large scale display and input operation using keyboards.

BRIEF DESCRIPTION OF THE DRAWINGS

Figure 1 is a graph illustrating the display principle of the phase transition-type liquid crystal composition of this invention;

Figs. 2a and 2b are illustrations showing an example of the liquid crystal driving method using polarizing plates;

Figs. 3a and 3b are illustrations showing an example of the liquid crystal driving method using no polarizing plate;

Figs. 4a and 4b are graphs showing a pattern of liquid crystal driving signals used in Example 1, and;

Fig. 5 is a graph illustrating the hysterisis curve of the liquid crystal display panel obtained in Example 1.

Before the discussing of each of the liquid crystal compounds used in the composition of this invention, it will be explained how we found the described combination of the liquid crystal compounds which shows many unexpected effects.

First, in order to attain a stabilization of the metastable homeotropic or H' state, we studied the hysteresis curve of the cholesteric-nematic mixed liquid crystal. We learned from the study that the H' state will be stabilized if a width or $\Delta V$ of the voltage hysteresis is extended (see Fig. 1). If the voltage hysteresis width $\Delta V$ is extended, a conversion of from the H' state to the F state will be effectively prevented, because the extension of width makes the range of the retention voltage Vd to be applied wide and accordingly enables the application of Vd at a higher level. The higher voltage Vd means a stabilized H' state.

Second, we learned during study of the liquid crystal materials suitable in the extension of the voltage hysteresis width $\Delta V$ that there is a certain rule between a molecular structure of the liquid crystal compound and the width $\Delta V$ of the resulting liquid crystal, and therefore limited numbers of the liquid crystal compounds having a certain molecular structure can exhibit a largely extended width.

As a result of study, as described above, we found that a remarkably extended width of the voltage hysteresis can be attained if a mixture of at least one estertype liquid crystal compound having an ester linkage in its molecular structure and at least one chiral nematic liquid crystal compound is combined with at least one bicyclohexane-type liquid crystal compound having two directly bonded cyclohexane rings

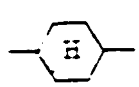 .

The liquid crystal compositiobn of the invention may additionally comprise an ethane-type liquid crystal compound.

In the present invention, the liquid crystal composition containing all of the above-described four liquid crystal compounds is the most preferred. It shows a fast writing speed and a wide mesorange which is an indication of liquid crystal at room temperature, in addition to a large voltage hysteresis width.

The liquid crystal composition containing three components, namely, ethane-type, ester-type and chiral nematic liquid crystal compounds, shows a larger hysteresis width than that of the last-described one, but tends to narrow the mesorange. A liquid crystal composition containing bicyclohexane-type, ester-type, and chiral nematic liquid crystal compounds is effective to reduce a viscosity of the resulting liquid crystal and extend the hysteresis width, while the amount of extension is smaller than that of the last-described composition containing the ethane-type liquid crystal compound.

The ethane-type liquid crystal compounds which may be used in the present invention are considered to be mainly effective to extend a voltage hysteresis width $\Delta V$ because of their ethylenic linkage positioned as a central group between two ring structures. In fact, due to their molecular structure, they can freely move (rotate or flex). Namely, they can show free rotation about the single bond of the ethylenic linkage, stretching vibration, bending vibration, and twisting or wagging. Ethylenic linkage in which two carbon atoms are connected by a single bond, and two carbon tetrahedra can rotate about single bond, so various arrangements of the stoms in a molecule arise by rotation about single bond such as staggrered conformation, eclipsed conformation or skew conformation. As a result, these ethane-type compounds can show an increased flexibility, and moderate a conversion of from a nematic phase (H' state) to a cholesteric phase (F state). Further, they can act stably.

The ethane-type liquid crystal compounds useful in the liquid crystal composition of this invention are represented by the formula:

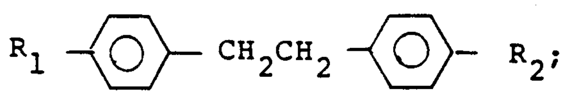

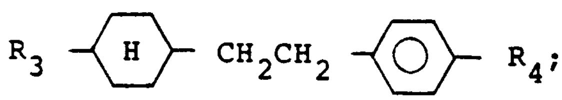

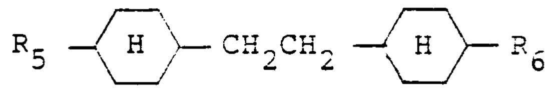;

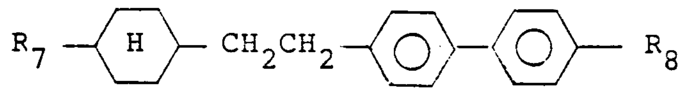;

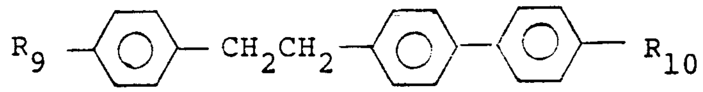;

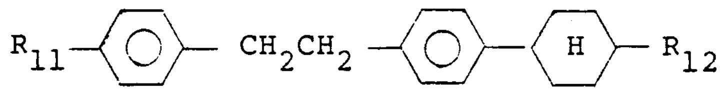;

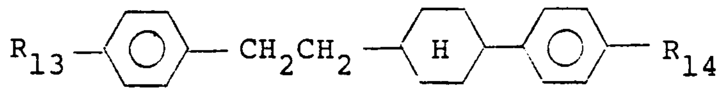;

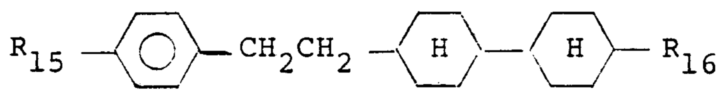;

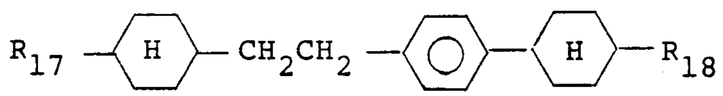;

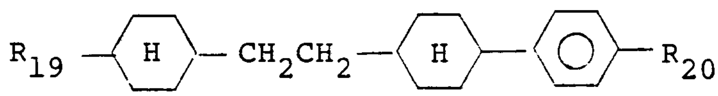, or;

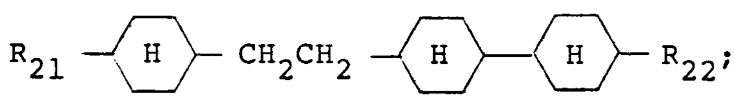;

in which $R_1$, $R_3$, $R_5$, and $R_7$ may be the same or different and each represents an alkyl group of 2 to 7 carbon atoms,

$R_2$, $R_4$, $R_6$, and $R_8$ may be the same or different and each represents an alkyl group of 2 to 7 carbon atoms, an alkoxy group of 1 to 6 carbon atoms,

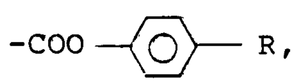,

a fluorine atom (F), a bromine atom (Br), or a cyano group (-CN),

R represents an alkyl group of 2 to 7 carbon atoms, a fluorine atom, or a bromine atom,

$R_9$, $R_{11}$, $R_{13}$, $R_{15}$, $R_{17}$ $R_{19}$, and $R_{21}$ may be the same or different and each represents an alkyl group of 2 to 7 carbon atoms or an alkoxy group of 1 to 6 carbon atoms, and

$R_{10}$, $R_{12}$, $R_{14}$, $R_{16}$, $R_{18}$, $R_{20}$, and $R_{22}$ may be the same or different and each represents an alkyl group of 2 to 7 carbon atoms, a fluorine atom, a chlorine atom, a bromine atom, or a cyano group.

Typical examples of the ethane-type liquid crystal compounds useful herein include:

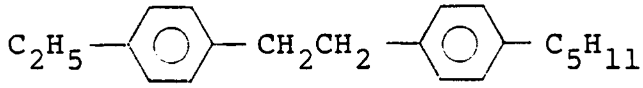 ,

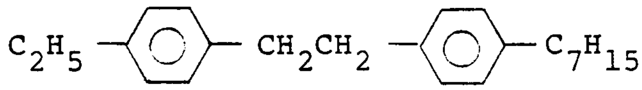 ,

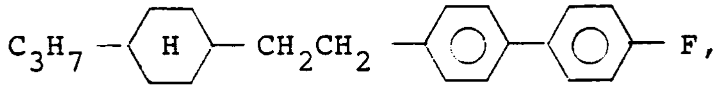 ,

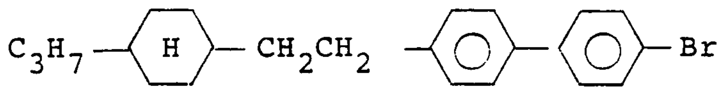 ,

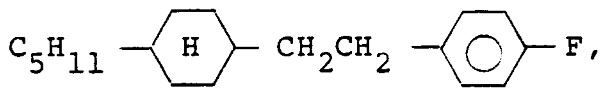 ,

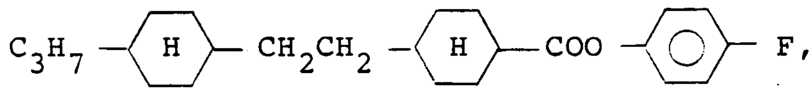 ,

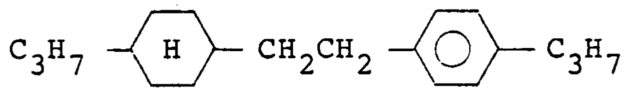 ,

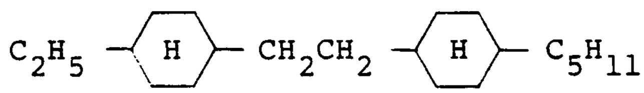 ,

or the like.

The described ethane-type liquid crystal compounds can be used in an amount of about 10% to 70% by weight, preferably about 10% to 40% by weight, based on the total weight of the liquid crystal composition. The above range of the described compounds is the most preferred one in view of inhibiting an excessive increase of the viscosity and ensuring a satisfactory mesorange in which the compounds acts as a liquid crystal, while a wider $\Delta V$(hysteresis width) can be attained if the compounds are used in any amount exceeding the upper limit. Similarly, the other three liquid crystal compounds discussed in detail hereinafter can be usefully used in the specified range.

The bicyclohexane-type liquid crystal compounds used in the present invention, due to their cyclohexane ring structure, can freely move (or flex). This is because the cyclohexane ring structure can take two conformations; i.e., chair-type and boat-type, and these conformations can be changed to each other. Bicyclohexane having two cyclohexane rings can revolve freely around their common axis. Further, they can contribute to an extension of the voltage hysteresis width, a reduction of the viscosity of the liquid crystal composition, and a speeding up of writing. They can act stably, too.

The bicyclohexane-type liquid crystal compounds useful separately or in combination with the above-discussed ethane-type one in the liquid crystal composition of this invention are represented by the formula:

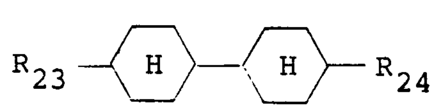

in which

$R_{23}$ represents an alkyl group of 2 to 7 carbon atoms and

$R_{24}$ represents an alkyl group of 2 to 7 carbon atoms or a cyano group.

Typical examples of the bicyclohexane-type liquid crystal compounds useful herein include:

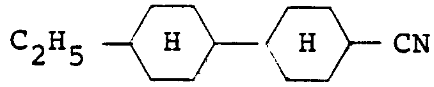,

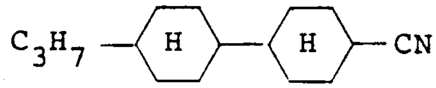,

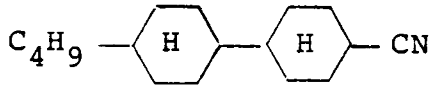,

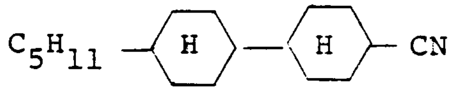,

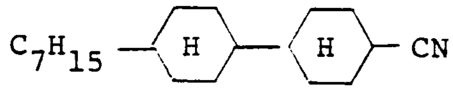,

or the like. These liquid crystal compounds can be used in an amount of about 10% to 60% by weight, preferably about 20% to 40% by weight, based on the total weight of the liquid crystal composition.

Further, the ester-type liquid crystal compounds used in the present invention can mainly contribute to an extension of the mesorange of the resulting liquid crystal composition when one or more of them are used in combination with the above-discussed bicyclo-hexane-type liquid crystal compounds.

Typical examples of the ester-type liquid crystal compounds useful in the practice of the present invention include:

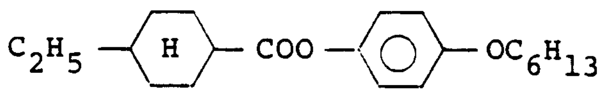;

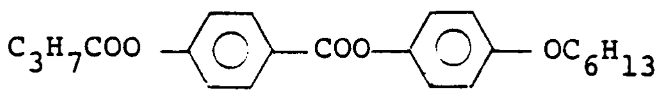;

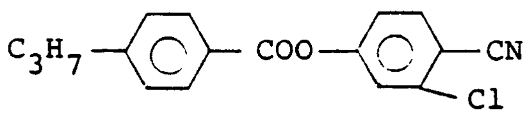;

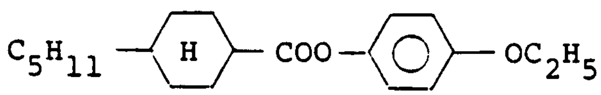;

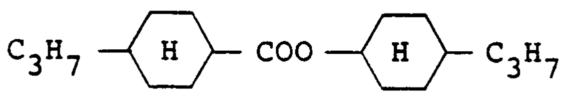;

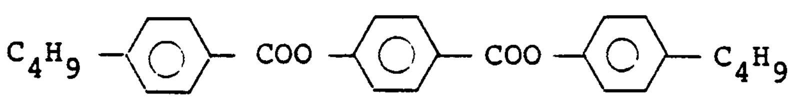;

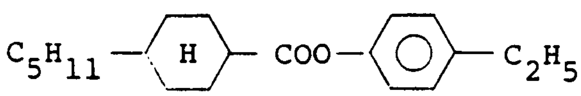;

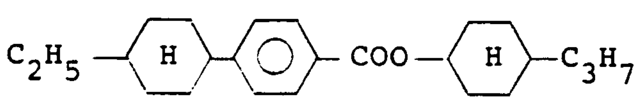, or;

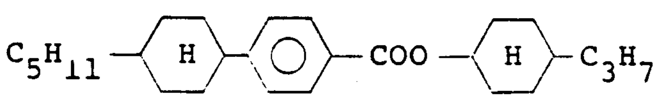;.

or the like.

Optionally, an oxygen atom of the central group-COO-of the described liquid crystal compounds may be substituted with a sultur atom to form the corresponding thioester-type liquid crystal compounds, for

example:

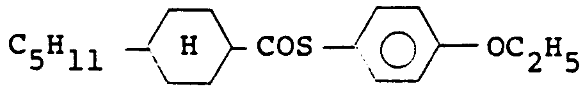

, and;

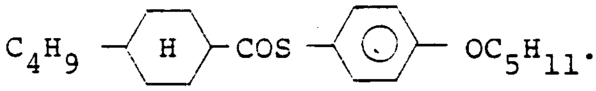

The above-described ester-type and thioester-type liquid crystal compounds can be used in an amount of abut 15% to 85% by weight, preferably about 20% to 55% by weight, based on the total weight of the liquid crystal composition.

Furthermore, the chiral nematic liquid crystal compounds used in the present invention are effectively used to give a helical structure to the resulting liquid crystal composition.

Typical examples of the chiral nematic liquid crystal compounds useful in the practice of the present invention include:

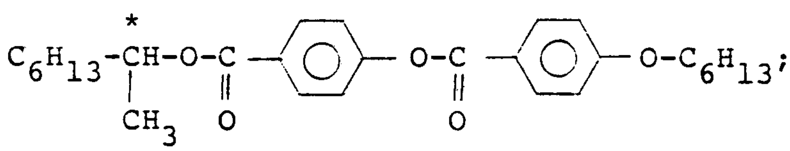

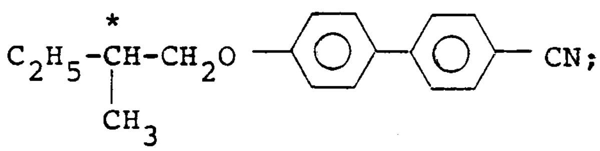

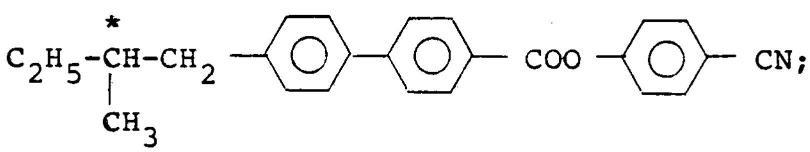

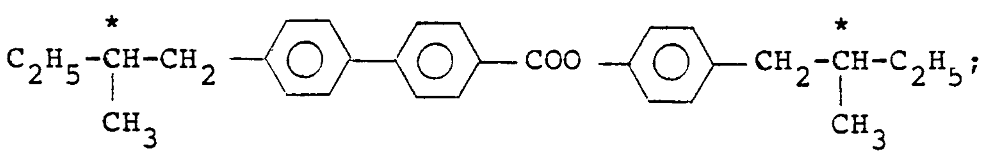

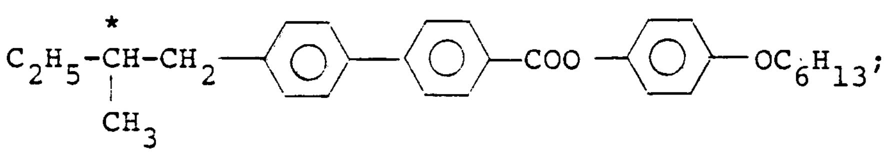

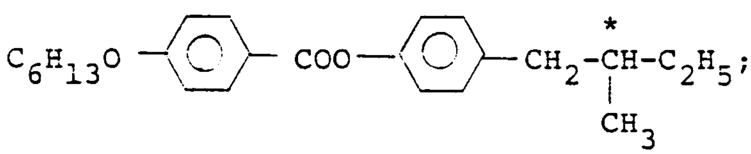

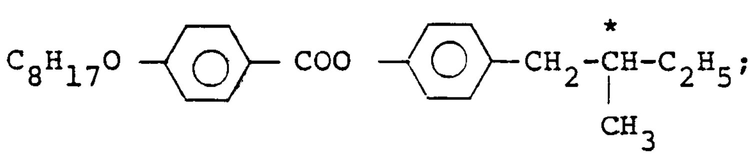

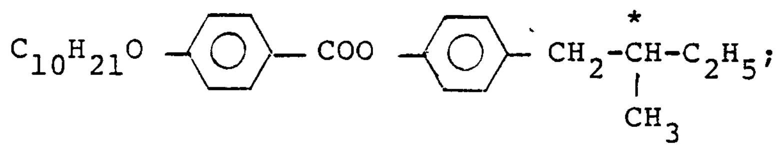

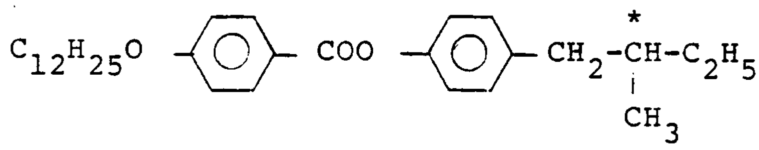

, or;

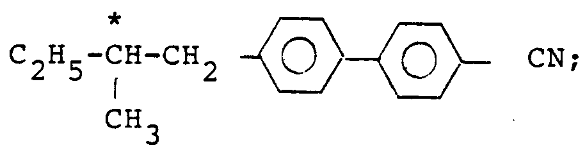

in which C* means an asymmetric carbon atom.

These chiral nematic liquid crystal compounds can be generally used in an amount of about 8% to 40% by weight, preferably about 10% to 30% by weight, based on the total weight of the liquid crystal composition. In the production of a cholesteric storage-type liquid crystal display device, they must be used in an amount of about 4% to 80% by weight, since the chiral nematic liquid crystal compounds belong to a group of the cholesteric liquid crystals.

In the practice of the present invention, if desired, additional amounts of conventional liquid crystal compounds such as biphenyl-type, dioxane-type, pyrimidine-type, cyclohexane-benzene type, or terphenyl- or cyclohexanebiphenyl-type liquid crystal compounds may be added to the liquid crystal composition improve its characteristics. Practically, we used, as an additive, some of these conventional liquid crystal compounds in the hereinafter-described working examples.

Generally, the biphenyl-type liquid crystal compounds are effectively used to reduce a driving voltage, because they have a positive dielectric anisotropy and the anisotropy is large. In particular, $C_5H_{11}$

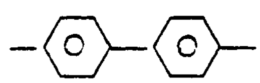

CN having a low viscosity is effective to reduce a viscosity of the resulting liquid crystal composition. These compounds are usually used in an amount of several percent by weight to 20% by weight, because these compounds have rather straight and hard structure at the central bonds, so if the more these compounds used, the narrower the $\Delta V$.

The dioxane-type liquid crystal compounds have a remarkably increased dielectric anisotropy and therefore are effective to reduce a driving voltage. However, in the phase transition-type liquid crystal, the driving voltage mainly depends on $\Delta\epsilon$ and viscosity, so that dioxane-type compounds should not be used in higher amounts, since they tend to increase the viscosity. Generally, they should be used in an amount of several percent by weight to 15% or 20% by weight.

Further, it is contemplated to use pyrimidine-type liquid crystal compounds in combination with bicyclohexane-type, ethane-type, or other liquid crystal compounds to extend the voltage hysteresis width $\Delta V$. The freedom of the movement in the molecule which is considered to be caused due to heterocyclic compounds contained in the molecule are in conformity with other liquid crystal compounds. The pyrimidine-type liquid crystal compounds should be used in at most 15% by weight, because they have an increased viscosity.

In addition to these conventional liquid crystal compounds, cyclohexane-type liquid crystal compounds are also useful. The cyclohexane-type compounds, due to their low viscosity, are effectively used to reduce a driving voltage as a result of reduction of the viscosity of the resulting composition. However, these compounds, due to their small refractive anisotropy, if the more these compounds are used, the smaller the intensity of the light scattering and the lower the contrast. These compounds are preferably used in an amount of several percent by weight to 20% by weight.

Small amounts, for example, 10% by weight or less, of the terphenyl- or cyclohexanebiphenyl-type liquid crystal compounds are also useful. These compounds can increase the light scattering intensity. However, these compounds, due to their high viscosity, if the more these compounds used, the higher the

driving voltage.

This invention will be further described with reference to the accompany drawings.

Referring now to Fig. 1, there is illustrated the display principle of the liquid crystal composition according to the present invention, from which figure it will be understood that the display principle is based on a cholesteric-nematic phase transition phenomenon.

The nematic-cholesteric phase transition-type liquid crystal having positive dielectric anisotropy indicates the characteristics of the light transmittance vs. applied voltage as shown in Fig. 1. By increasing the electric field applied to the liquid crystal, the liquid crystal display panel changes of from the cloudy state (cholesteric phase:F) to the transparent state (nematic phase:H), and by decreasing the electric field applied to the liquid crystal, the liquid crystal display panel transits of from the nematic phase H to the cholesteric phase F via metastable transparent state (nematic phase:H').

At F phase, the liquid crystal in the panel holds spiral or helical structure as shown in fig. 1, and the helical axis of the liquid crystal structure is parallel to the substrate of the panel and the incident light to the panel is scattered by the liquid crystal, and the panel becomes cloudy state. On the other hand, at H phase, the liquid crystal in the panel dissolves the helical structure and the liquid crystal molecules are aligned perpendicularly to the substrate of the panel as shown in Fig. 1, and the liquid crystal becomes homeotropic transparent state.

At H' phase, the liquid crystal indicates homeotropic state, but the liquid crystal molecules at the central portion from the substrates of the panel are inclined somewhat to the liquid crystal molecules near the substrates which are vertically aligned to the substrates, as shown in Fig. 1. Thus, at H' phase, there is difference in the inclining angle of the liquid crystal molecules between the liquid crystal molecules near the substrate and the liquid crystal molecules at the central portion of the substrates of the panel. In this state, high freedom of the movements of the liquid crystal molecule such as rotation, bending or flexing is useful and effective to retain the homeotropic transparent state stably. On the other hand, in such circumstances, the axis inclining of the liquid crystal molecule having relatively rigid or hard structure at the central portion of the substrates of the panel are transmitted to the molecules near the substrates, and the liquid crystal rapidly changes its phase from homeotropic state to focal-conic state. Further, the H' phase is meta-stable state which transits or changes to the F phase by such as heat disturbance. The meta-stability of the H' phase affects to the magnitude of the hysteresis effect and stability.

To evaluate the magnitude and stability of the hysteresis effect of the liquid crystal, it is effective to define $\Delta V$. As shown in Fig. 1, $\Delta V$ is defined such that $\Delta V = Vu^{20} - Vd^{90}$ wherein $Vu^{20}$ is the applied voltage to the panel which gives 20% light transmittance on the cholesteric → nematic phase transition curve of Fig. 1, and $Vd^{90}$ is the applied voltage which gives 90% light transmittance on the nematic → cholesteric phase transition curve of Fig. 1. $\Delta V$ is a parameter which indicates the magnitude of the hysteresis.

In the measurement of the voltage hysteresis width ($\Delta V$) which corresponds to the actual driving mode, two step processes can be used. First step is made to ascertain the relationship of the light transmittance vs. applied voltage in the phase transition from cholesteric phase to nematic phase.

At first, selected voltage $V_0$ is applied to the selected point of the substrates of the panel, and the time dependency of the light transmittance ratio is measured. Next, voltage $V_1$ which is slightly higher than the voltage $V_0$ is applied to the selected point of the panel, and the time dependency of the light transmittance ratio is measured. As same above, applied voltage to the selected point of the panel is gradually and slightly increased until the voltage becomes equal to or higher than the voltage $V_H$ , and each of the time dependency of the light transmittance ratio was measured respectively to the corresponding applied voltage.

Each of the light transmittance data for 10 seconds later after applying voltage was picked up from the data of the time dependence of the light transmittance to the applied voltage. And then, the relationship between the applied voltage and light transmittance was plotted.

Second step is made to ascertain the relationship between the light transmittance and applied voltage in the phase transition from nematic phase to cholesteric phase.

Measurements were done as in the first step described above, except that the applied voltage to the panel was gradually decreased from the voltage equal or higher than the voltage $V_H$ , at which voltage liquid crystal indicates completely homeotropic transparent phase, to zero volt. Thus, the relationship of the light transmittance vs. applied voltage in the nematic → cholesteric phase transition can be obtained. By the lapse of the two step measurements, the hysteresis loop of the nematic-cholesteric phase transition can be obtained. Further, $\Delta V$ can be gained from the hysteresis loop by measuring the value of the applied voltage $Vu^{20}$ and $Vd^{90}$, respectively.

The display principle of the described liquid crystal composition is furthermore described.

First, a voltage of $V_H$ (= 2 Vd) is applied between all electrodes of the X-Y matrix-type liquid crystal

display device to convert a liquid crystal 1 to the H state, which consists of a nematic phase (see Fig. 1 and Fig. 2b). In the H state, as is shown in Fig. 2b, all molecules of the liquid crystal 1 are orientated in the same direction to the direction of electrical field, i.e., in the direction perpendicular to substrates 2 and 3. An incident radiation 6, after successively passed through a polarizing plate 4, the substrate 2, the liquid crystal 1 and the substrate 3, reaches another polarizing plate 5 and stops there. The radiation 6 is not transmitted through the polarizing plate 5, since the plates 4 and 5 have different polarization angles and the difference of the angle is just 90°. Accordingly, the liquid crystal 1 is in a dark state.

When the applied voltage is reduced to zero, the liquid crystal 1 in the dark state is converted in from the H state to the $F_0$ state, which consists of a cholesteric phase (see Fig. 1 and Fig. 2a). The liquid crystal 1, after once converted to the $F_0$ state, is converted to the F state, which is optically the same as the $F_0$ state, when the retention voltage Vd is applied thereto. The liquid crystal 1 in the $F_0$ and F states has a helical structure, which means that the radiation is rotated or scattered during transmittance. Accordingly, as is shown in Fig. 2a, the radiation 6 is at least partly passed through the polarizing plate 5. The liquid crystal 1 in the light state results.

On the other hand, the initial H state can be constantly maintained due to hysteresis characteristics of the liquid crystal, even if the applied voltage of 2 Vd (= $V_H$) is reduced to Vd. The new or second H state under the application of the voltage Vd is particularly referred to herein as an H' state, in order to distinguish it from the H state under the applied voltage $V_H$.

As is apparent from the above description, the display device using the liquid crystal composition of this invention can exhibit bistable behavior, or two stable optical states F and H' under the application of the same voltage Vd. Therefore, we can optionally select one of these states with the application of the voltage Vd.

In the above paragraphs, we referred to Figs. 2a and 2b, and explained the principle of driving the liquid crystal display device of this invention using two polarizing plates. However, alternatively, we can drive the liquid crystal display device without using the polarizing plate. This will be described hereinafter referring to Figs. 3a and 3b.

As is illustrated in Figs. 3a and 3b, the liquid crystal 1 is sandwiched with two substrates 2 and 3 to form a liquid crystal display panel. A back surface of the display panel is provided with a black plate 7. The illustrated liquid crystal display panel, when it is converted to the F or $F_0$ state, is in a light state. This is because, as is shown in Fig. 3a, the incident radiation 6 is scattered or reflected upon irradiation on the liquid crystal 1 (the scattered or reflected radiation is indicated with arrow 8) and therefore is not absorbed in the backing black plate 7. On the other hand, the liquid crystal display panel, when it is in the H' or H state as in Fig. 3b, indicates a dark state, because the incident radiation 6 is passed through a layer of the liquid crystal 1 and is finally absorbed into the black plate 7. It is contemplated to use a lustrous black plate to increase the contrast between the light state and dark state.

## EXAMPLES

Hereinafter, this invention will be furthermore described with reference to some working examples.

The following is a list of the liquid crystal compositions used in the examples, in which the compositions A, B, E, and G each is the composition within the scope of the present invention, and the compositions $C_1$, $C_2$, D, F, H and I each is a control composition.

## Liquid Crystal Composition A

| Liquid Crystal Compounds | % by weight |
|---|---|
| 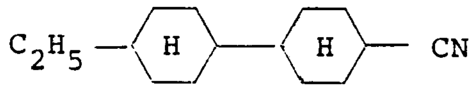 | 18.2 |
| 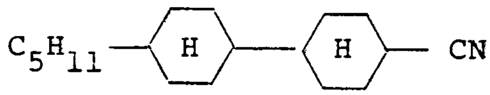 | 18.2 |
| 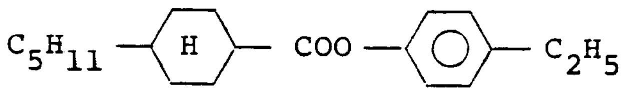 | 9.1 |
| 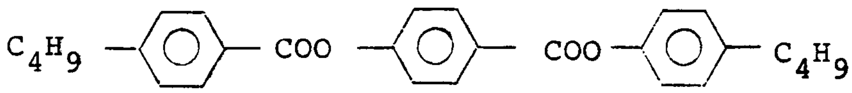 | 12.1 |
| 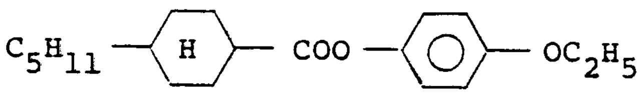 | 9.1 |
| 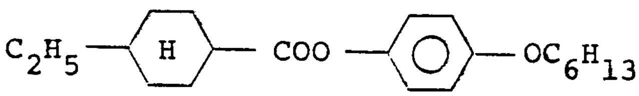 | 21.2 |
| 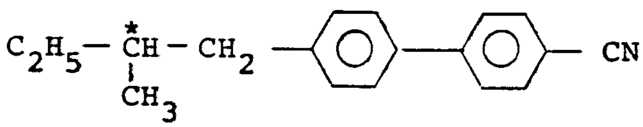 | 12.1 |

## Liquid Crystal Composition B

| Liquid Crystal Compounds | % by weight |
| --- | --- |
| 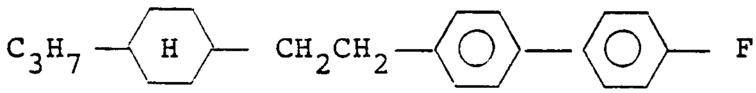 | 6.5 |
| 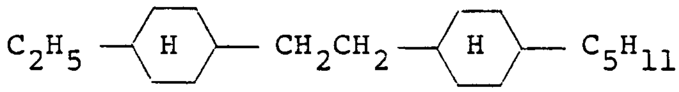 | 9.8 |
| 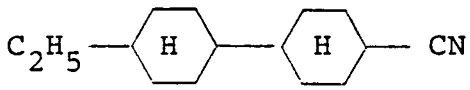 | 9.8 |
| 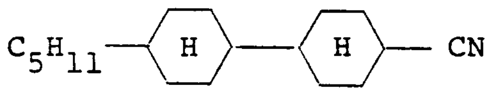 | 9.8 |
| 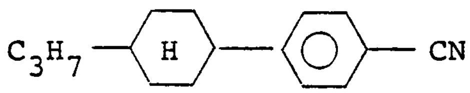 | 9.8 |
| 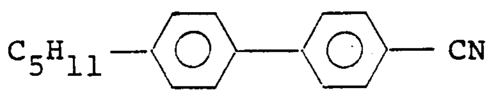 | 13.0 |
| 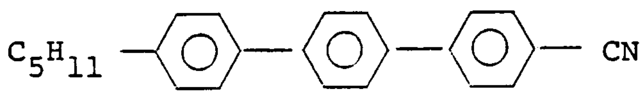 | 3.3 |
| 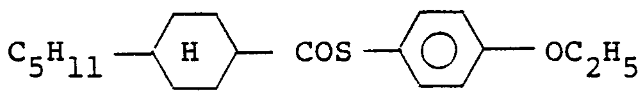 | 9.8 |
| 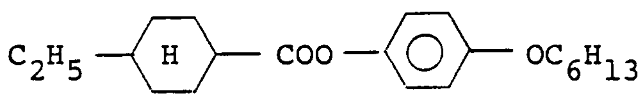 | 9.8 |
| 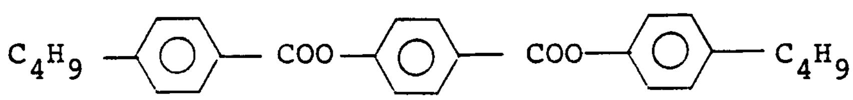 | 6.5 |
| 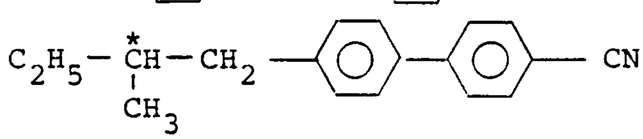 | 11.9 |

## Liquid Crystal Composition $C_1$

| Liquid Crystal Compounds | % by weight |
|---|---|
| 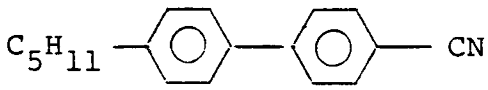 | 25.0 |
| 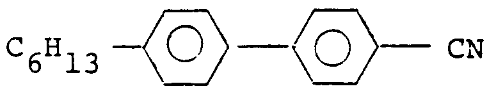 | 14.3 |
| 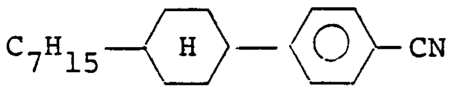 | 17.9 |
| 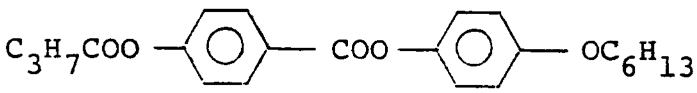 | 7.2 |
| 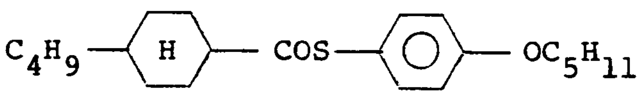 | 7.2 |
| 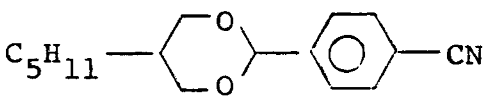 | 16.7 |
| 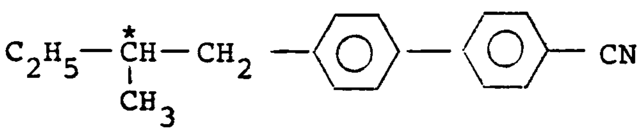 | 11.7 |

## Liquid Crystal Composition $C_2$

| Liquid Crystal Compounds | % by weight |
|---|---|
| 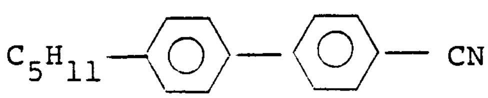 | 25.0 |
| 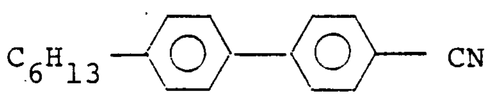 | 14.3 |
| 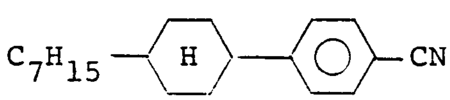 | 17.9 |
| 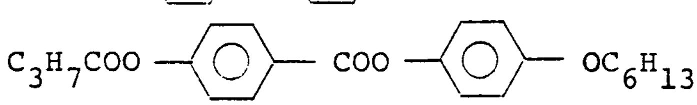 | 7.2 |
| 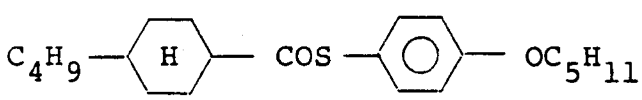 | 7.2 |
| 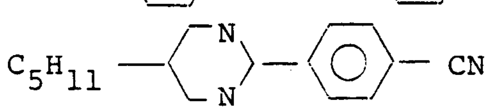 | 16.7 |
| 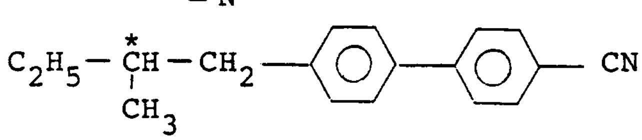 | 11.7 |

## Liquid Crystal Composition D

| Liquid Crystal Compounds | % by weight |
|---|---|
| 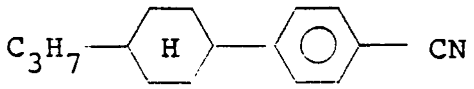 | 14.2 |
| 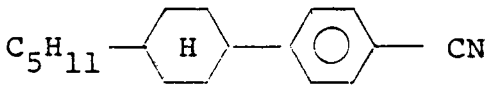 | 14.2 |
| 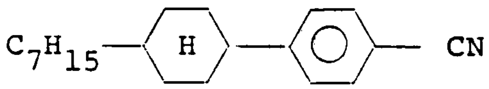 | 14.2 |
| 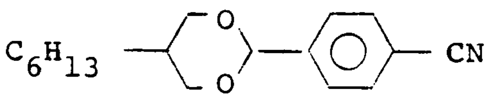 | 10.6 |
| 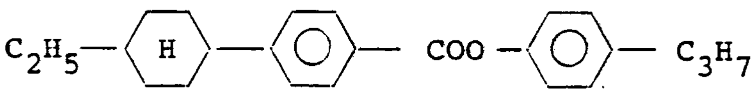 | 7.1 |
| 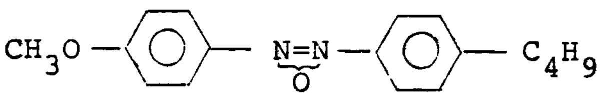 | 24.8 |
| $C_{27}H_{45}Br$ | 7.0 |
| $CH_3(CH_2)_{12}COOC_{27}H_{45}$ | 7.9 |

Liquid Crystal Composition E

| Liquid Crystal Compounds | % by weight |
| --- | --- |
| 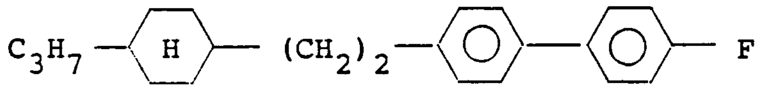 | 7.7 |
| 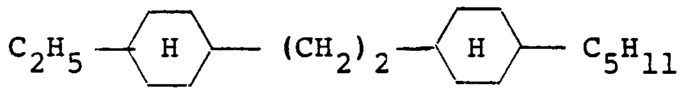 | 7.7 |
| 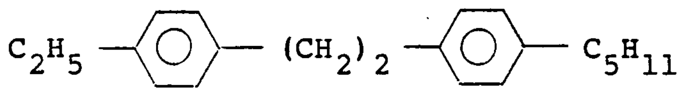 | 7.7 |
| 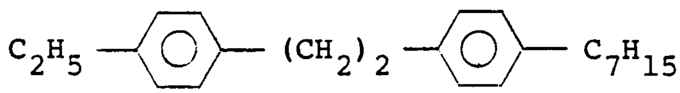 | 7.7 |
| 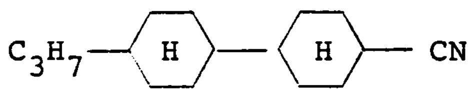 | 7.7 |
| 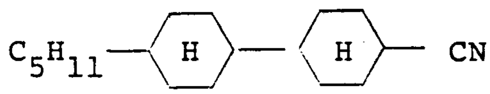 | 7.7 |
| 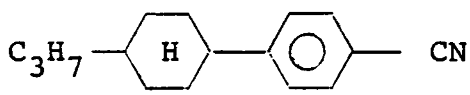 | 7.7 |
| 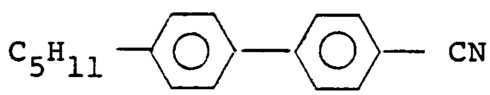 | 7.7 |
| 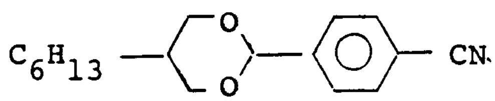 | 5.1 |
| 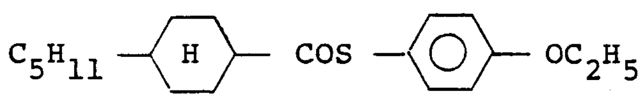 | 2.6 |
| 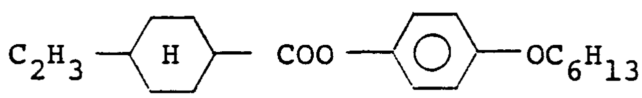 | 2.6 |
| 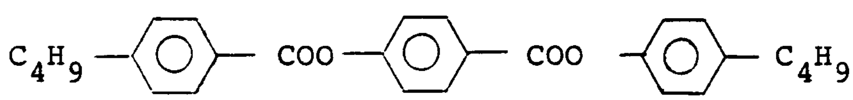 | 2.6 |
| 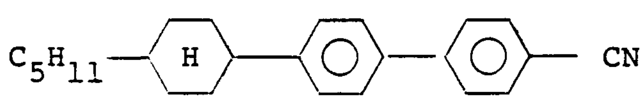 | 8.0 |
| 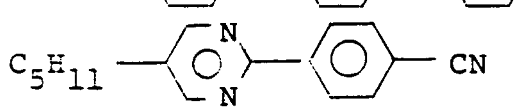 | 2.6 |
| 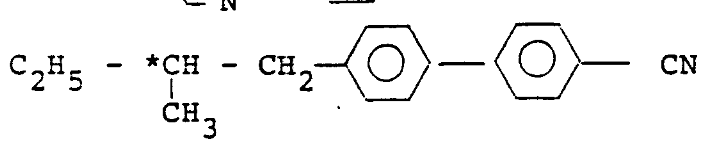 | 14.9 |

## Liquid Crystal Composition G

| Liquid Crystal Compounds | % by weight |
|---|---|
| 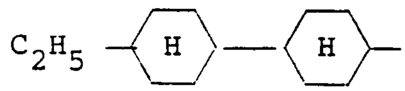 | 11.4 |
| 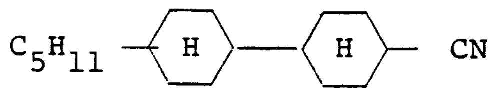 | 11.4 |
| 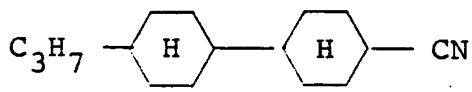 | 11.4 |
| 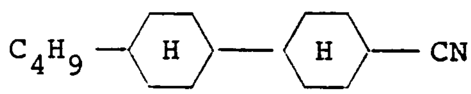 | 11.4 |
| 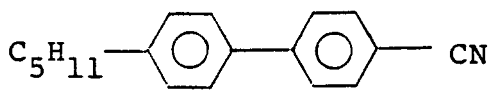 | 18.9 |
| 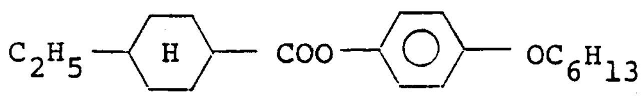 | 15.1 |
| 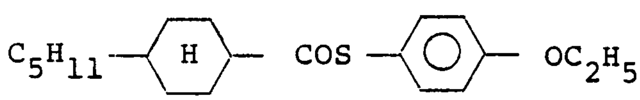 | 7.6 |
| 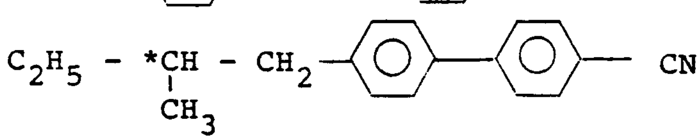 | 12.8 |

## Liquid Crystal Composition H

| Liquid Crystal Compounds | % by weight |
|---|---|
| 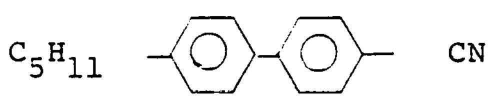 | 56.1 |
| 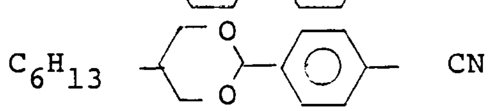 | 12.2 |
| 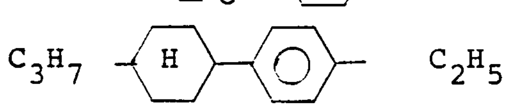 | 12.2 |
| 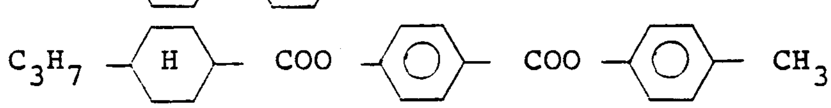 | 2.4 |
| 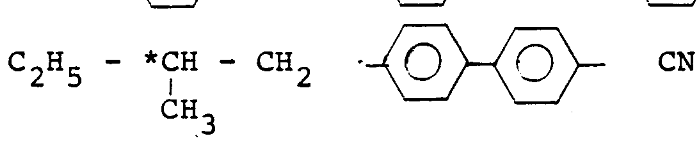 | 17.1 |

## Liquid Crystal Composition I

| Liquid Crystal Compounds | % by weight |
|---|---|
| 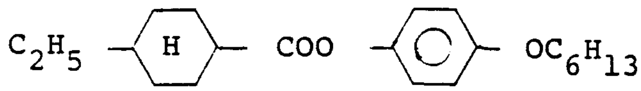 | 8.7 |
| 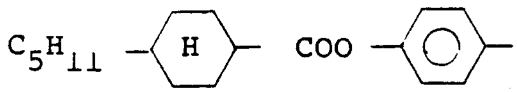 | 5.8 |
| 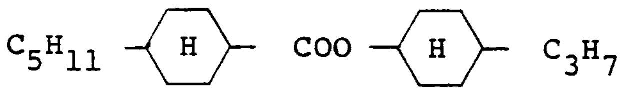 | 8.7 |
| 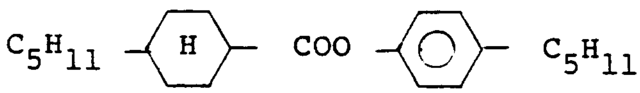 | 8.7 |
| 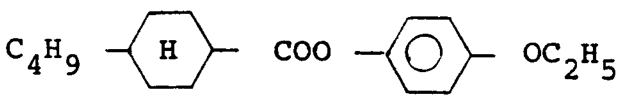 | 8.7 |
| 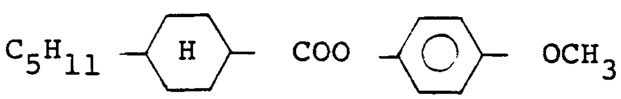 | 8.7 |
| 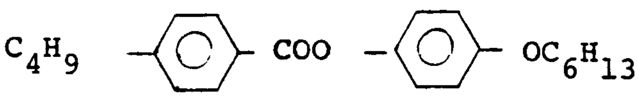 | 11.6 |
| 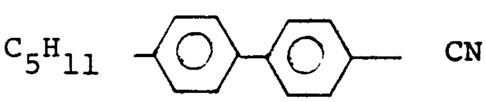 | 17.4 |
| 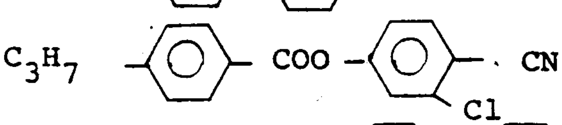 | 8.7 |
| 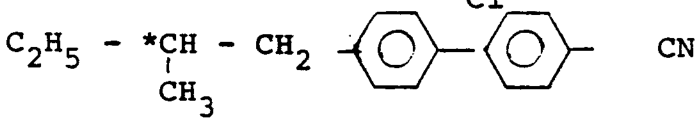 | 13.0 |

Example 1

Two glass substrates with ITO (indium oxide $In_2O_3$) coating were first washed with a detergent and then subsequently washed with isopropyl alcohol, acetone, and pure water. These substrates were then treated with oxygen plasma to improve their surface properties. There substrates were bonded through a spacer of 12 μm thick polyester film, commercially available from E. I. du Pont Co. under the trade name Mylar® , and sealed with an epoxy adhesive to form a panel. The panel was filled with the above-listed four liquid crystal compositions A, B, $C_1$ , and D. Four types of liquid crystal display panels; P-A (present invention), P-B (present invention), P-$C_1$ (control), and P-D (control) were produced.

Each of the four liquid crystal display panels were tested to determine their voltage hysteresis width (ΔV). First, a predetermined voltage $Vd_1$ was set, and the liquid crystal display panel was driven following the driving wave patterns shown in Figs. 4a and 4b. After writing, a variation of the light transmittance of the panel was recorded as time versus variation of the light transmittance. Similarly, the variation of the light transmittance of the panel was recorded under the application of the voltage $Vd_2$ , which is slightly higher than the previously set voltage $Vd_1$. Similar recordings were repeated except that the applied voltage was gradually increased in such a manner that $Vd_3 \rightarrow Vd_4$ , $Vd_4 \rightarrow Vd_5$ , ..., until a phase transition of from the cholesteric phase to nematic phase is caused. Therefore, a high voltage sufficient to maintain the nematic phase was applied to the panel, and then the applied voltage was gradually reduced. During reduction of the voltage, a variation of the light transmittance of the panel was repeatedly recorded as in the recording

described above. The results of recording were plotted in a graph of time versus variation of the light transmittance.

Based on the plotted graph of time versus variation of the light transmittance, another graph showing light transmittance (determined at a certain time lapse after writing) versus applied voltage was plotted. One of the plotted graphs is Fig. 5, which concerns the liquid crystal display panel P-B of the present invention. The light transmittance determined using a photocell is in mV, and the applied voltage is in volts.

The voltage hysteresis width (ΔV) of each of the liquid crystal display panels was evaluated from the graph of light transmittance versus applied voltage. In this evaluation, the writing time was 6 ms/line, and the width was evaluated as 10 sec after writing. The results are summarized in the following Table I.

Table I

| Liquid crystal display panels | Hysteresis width (ΔV) | Possible* writing speed (ms/line) |
|---|---|---|
| P-A | 0.9 | 4 |
| P-B | 2.5 | 3 |
| P-$C_1$ (control) | 0.3 | 6 |
| P-D (control) | 0 | 15 |

* The term "possible" was used herein to indicate that the writting speed varies depending upon the hysteresis width. Cenerally, the faster the writing speed, the narrower the hysteresis width.

The above results indicate that the display panels P-A and P-B produced using the liquid crystal compositions of this invention exhibit larger hysteresis widths and faster writing speed in comparison with the controls P-$C_1$ and P-D. The display panels of this invention are therefore compatible with scroll operation. In contrast, the prior art display panels are not adapted to the scroll operation in a large scale display, since they require a long writing time per each scanning line. Further, surprisingly, the display panels of this invention can maintain a satisfactory hysteresis width in spite of their shortened writing time, while, in the prior art panels, shortening of the writing time tends to narrow the hysteresis width.

Example 2

The procedure of Example 1 was repeated except that the liquid crystal compositions were replaced by the following five liquid crystal compositions E, G, H, and I. Liquid crystal display panels P-E (present invention), P-G (present invention), P-H (control), and P-I (control) were produced.

The results are summarized in the following Table II.

Table II

| Liquid crystal display panels | Hysteresis width (ΔV) | Possible writing speed (ms/line) |
|---|---|---|
| P-E | 3.3 | 3 |
| P-G | 2.7 | 3 |
| P-H (control) | 0.2 | 5 |
| P-I (control) | 1.1 | 5 |

It is evident from the above results that the display panels according to this invention exhibit satisfactory hysteresis widths and possible writing speed.

Example 3

The procedure of Example 1 was repeated except that, in this example, the liquid crystal composition $C_1$ was replaced with the liquid crystal composition $C_2$. Similar results were obtained.

For further understanding of this invention, the results of the above Examples 1 to 3 are summarized in the following Table III.

Table III

| Liquid crystal display Penals | Composition of liquid crystal compounds (% by weight) | | | | | | | | | | | | | | | | Characteristics | |
|---|---|---|---|---|---|---|---|---|---|---|---|---|---|---|---|---|---|---|
| | | | | Ester-type | | | Cyclohexane-phenyl-type | | | | | Heterocyclic type | | | | | ΔV | Writing speed |
| | ET | BH | CHi | ES | TH | Total | Cy-1 | Cy-2 | Cy-3 | Cy-4 | Total | DI | Py | Total | AZ | Ch0 | (volts) | (ms/line) |
| P-A | | 36.4 | 12.1 | (51.5) | | 51.5 | | | | | | | | | | | 0.9 | 4 |
| P-B | 16.3 | 19.6 | 11.9 | (16.3) | (9.8) | 26.1 | (9.8) | | (13.0) | (3.3) | 26.1 | | | | | | 2.5 | 3 |
| P-E | 30.8 | 15.4 | 14.9 | (5.2) | (2.6) | 7.8 | (7.7) | (8.0) | (7.7) | | 23.4 | (5.1) | (2.6) | 7.7 | | | 3.5 | 3 |
| P-G | | 45.6 | 12.8 | (15.1) | (7.6) | 22.7 | | | (18.9) | | | | | | | | 2.7 | 3 |
| P-H(control) | | | 13.0 | (69.6) | | 69.6 | | | (17.4) | | | | | | | | 1.1 | 5 |
| P-I(control) | | | 17.1 | (2.4) | | 2.4 | (12.2) | | (56.1) | | 68.3 | (12.2) | | 12.2 | | | 0.2 | 5 |
| P-$C_1$(control) | | | 11.7 | (7.2) | (7.2) | 14.4 | (17.9) | | (39.3) | | 57.2 | (16.7) | | 16.7 | | | 0.3 | 6 |
| P-$C_2$(control) | | | 11.7 | (7.2) | (7.2) | 14.4 | (17.9) | | (39.3) | | 57.2 | | (16.7) | 16.7 | | | 0.3 | 6 |
| P-D(control) | | | | (7.1) | | 7.1 | (42.6) | | | | 42.6 | (10.6) | | 10.6 | 24.8 | 14.9 | 0 | 15 |

Liquid crystal compounds;

ET ... Ethane-type; BH ... Bicyclohexane-type; CHi ... Chiral nematic type;

ES ... Ester-type; TH ... Thioester-type; Cy-1 ... 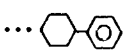 type; Cy-2 ... 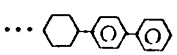 type;

Cy-3 ... 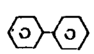 type; Cy-4 ... 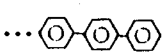 type; DI ... Dioxane-type; Py ... Pyrimidine-type;

Az ... Azoxy-type, and; $Ch_0$ ... Cholesteric type.

## Claims

1. A liquid crystal composition which exhibits a positive dielectric anisotropy and which is a cholesteric-nematic phase transition-type liquid crystal comprising a mixture of an ester-type liquid crystal

compound and chiral nematic liquid crystal compound having added thereto at least one bicyclohexane-type liquid crystal compound.

2. A liquid crystal composition as in claim 1 which additionally comprises an ethane-type liquid crystal compound.

3. A liquid crystal composition as in claim 2 in which the ethane-type liquid crystal compound has the formula

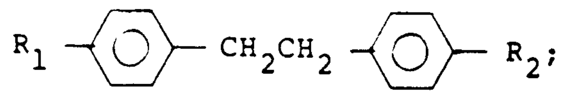

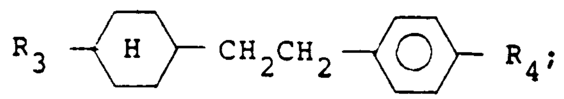

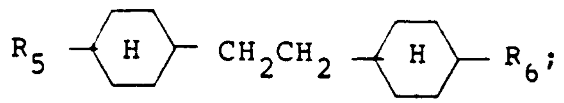

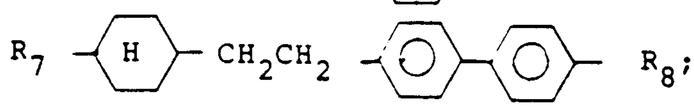

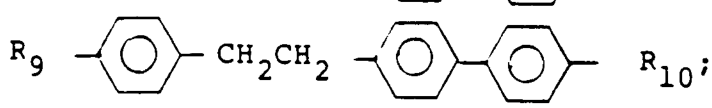

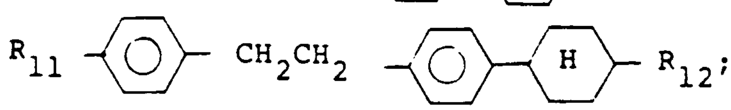

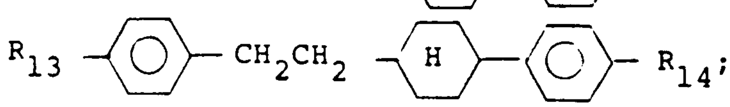

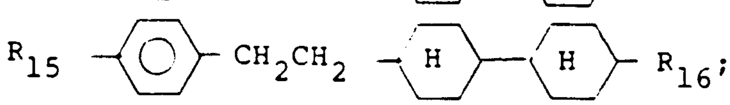

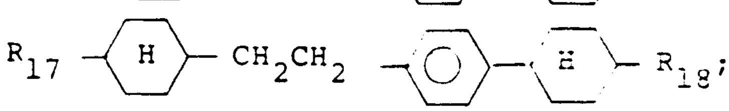

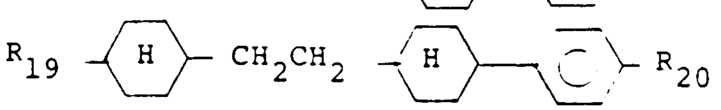

; or

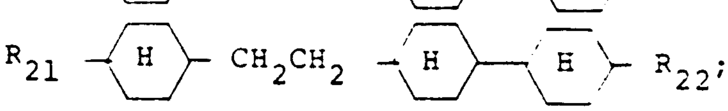

in which $R_1$, $R_3$, $R_5$, and $R_7$ may be the same or different and each represents an alkyl group of 2 to 7 carbon atoms,

$R_2$ , $R_4$ , $R_6$ , and $R_8$ may be the same or different and each represents an alkyl group of 2 to 7 carbon atoms, an alkoxy group of 1 to 6 carbon atoms,

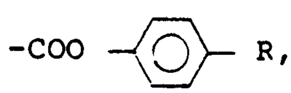

a fluorine atom, a bromine atom, or a cyano group,

R represents an alkyl group of 2 to 7 carbon atoms, a fluorine atom or a bromine atom,

$R_9$ , $R_{11}$ , $R_{13}$ , $R_{15}$ , $R_{17}$ ,

$R_{19}$ , and $R_{21}$ may be the same or different and each represents an alkyl group of 2 to 7 carbon atoms or an alkoxy group of 1 to 6 carbon atoms, and

$R_{10}$ , $R_{12}$ , $R_{14}$ , $R_{16}$ , $R_{18}$ ,
$R_{20}$ , and $R_{22}$ may be the same or different and each represents an alkyl group of 2 to 7 carbon atoms, a fluorine atom, a chlorine atom, a bromine atom, or a cyano group.

**4.** A liquid crystal composition as in claim 1 or 1 to 3 in which the bicyclohexane-type liquid crystal compound has the formula:

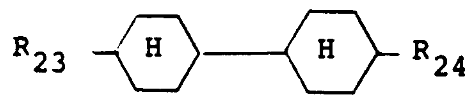

in which
$R_{23}$ represents an alkyl group of 2 to 7 carbon atoms and
$R_{24}$ represents an alkyl group of 2 to 7 carbon atoms or a cyano group.

**5.** A liquid crystal composition as in any one of claims 1 to 4 in which the ester-type liquid crystal compound has the formula:

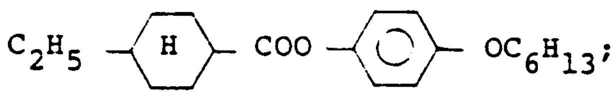

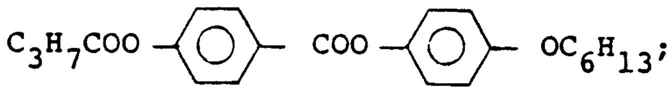

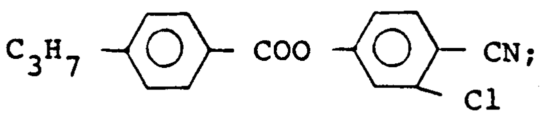

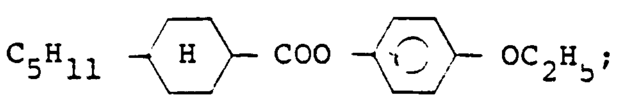

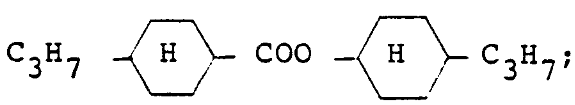

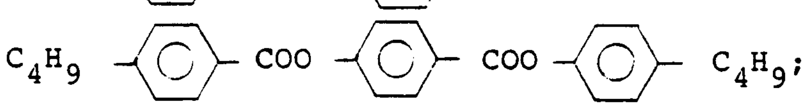

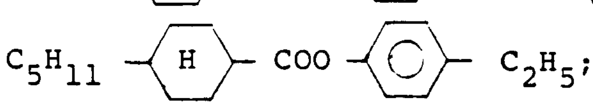

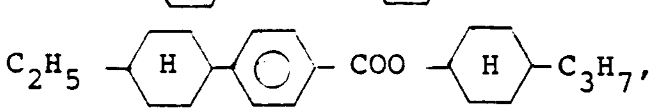
or;

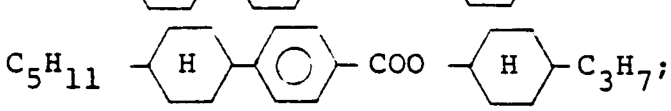

in which an oxygen atom of the central group -COO- may be optionally substituted with a sulfur atom.

**6.** A liquid crystal composition as in any one of claims 1 to 5 in which the chiral nematic liquid crystal compound has the formula:

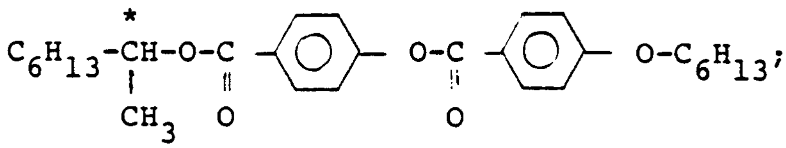

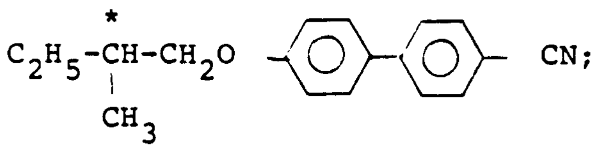

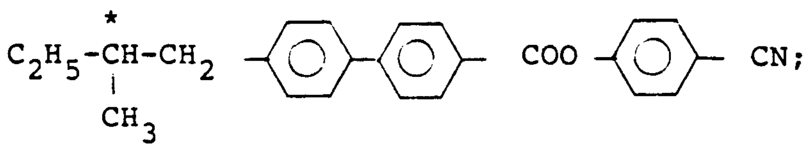

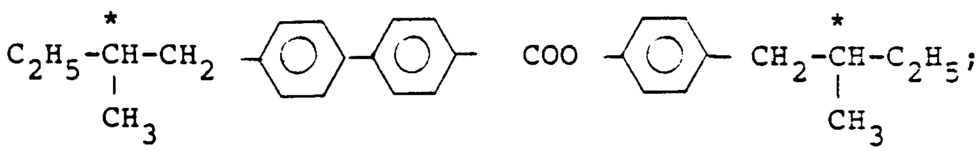

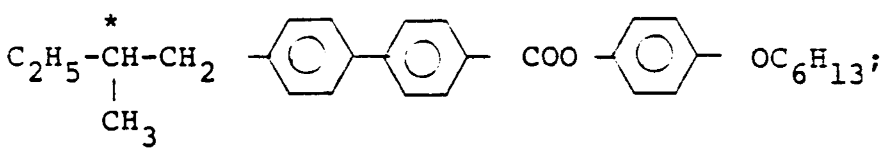

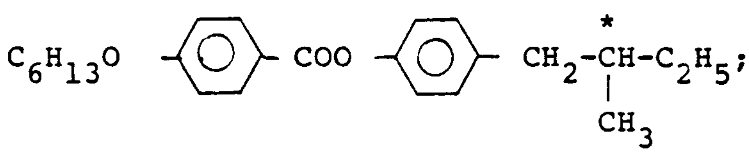

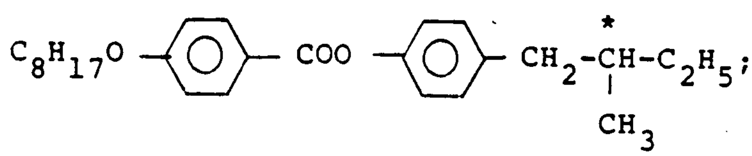

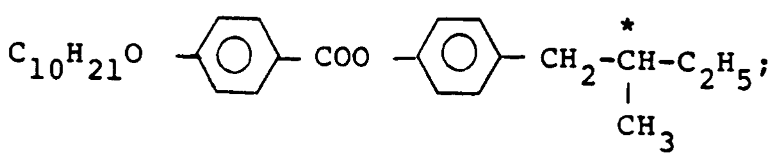

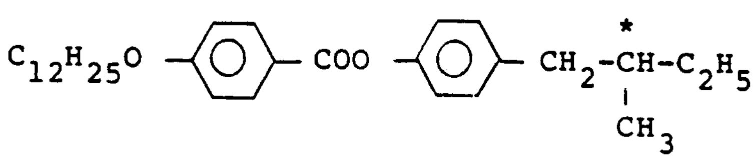

; or

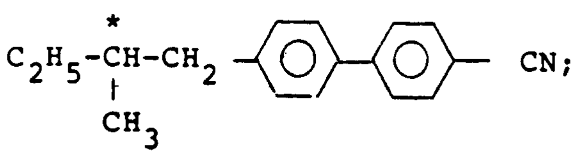

in which C* means an asymmetric carbon atom.

**7.** A liquid crystal composition as in any one of claims 2 to 6, in which the ethane-type liquid crystal compound is used in an amount of 10% to 70% by weight based on the total weight of the liquid

crystal composition, preferably in an amount of 10 to 40% by weight.

**8.** A liquid crystal composition as in any one of claims 1 to 7 in which the bicyclohexane-type liquid crystal compound is used in an amount of 10% to 60% by weight based on the total weight of the liquid crystal composition, preferably in an amount of 20 to 40% by weight.

**9.** A liquid crystal composition as in any one of claims 1 to 8 in which the chiral nematic liquid crystal compound is used in an amount of 8% to 40% by weight based on the total weight of the liquid crystal composition, preferably in an amount of 10 to 30% by weight.

**10.** A liquid crystal composition as in any one of claims 1 to 9 in which the ester-type liquid crystal compound is used in an amount of 15% to 85% by weight based on the total weight of the liquid crystal composition, preferably in an amount of 20 to 55% by weight.

**11.** A liquid crystal composition as in any one of claims 1 to 10 in which other types of liquid crystal compounds are additionally included.

**12.** A liquid crystal composition as in claim 11 which includes other types of liquid crystal compounds selected from the group consisting of biphenyl-type, dioxane-type, pyrimidine-type, cyclohexane-benzene type, terphenyl-type and cyclohexane-biphenyl-type liquid crystal compounds, and mixtures thereof.

**13.** A liquid crystal composition as in claim 11 or claim 12 which includes one or more compounds selected from a biphenyl-type liquid crystal compound in an amount of several percent to 20% by weight, suitably from 5 or 10% to 20% by weight, a dioxane-type liquid crystal compound in an amount of several percent to 20% by weight, preferably 3 to 15% by weight, a pyrimidine-type liquid crystal compound in an amount of up to 15% by weight, preferably up to 5 or 10% by weight, a cyclohexane-type liquid crystal compound in an amount of several percent to 20% by weight, suitably from 3 or 5% to 20% by weight, and terphenyl-and/or cyclohexane biphenyl-type liquid crystal compounds in a combined amount of up to 10% by weight, all percentages being based on the total weight of the liquid crystal composition.

**Revendications**

**1.** Une composition de liquide cristallin qui présente une anisotropie diélectrique positive et qui est un liquide cristallin du type à transition de phase cholestérique-nématique comprenant un mélange d'un composé liquide cristallin du type ester et d'un composé liquide cristallin nématique chiral auxquels on a ajouté un composé liquide cristallin du type biscyclohexane.

**2.** Une composition de liquide cristallin selon la revendication 1, qui comprend en outre un composé liquide cristallin du type éthane.

**3.** Une composition de liquide cristallin selon la revendication 2, dans laquelle le composé liquide cristallin du type éthane répond à la formule :

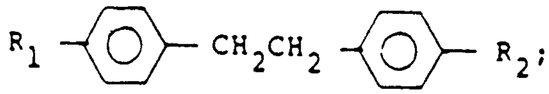 ;

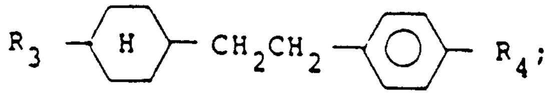 ;

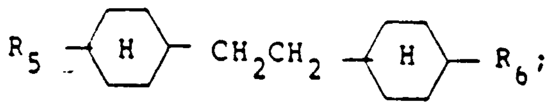 ;

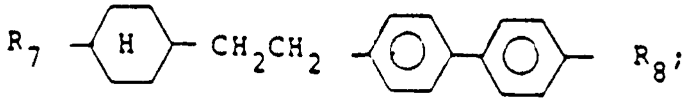 ;

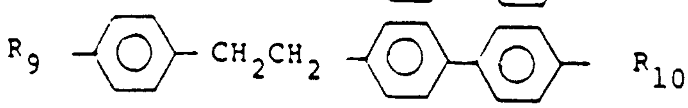 ;

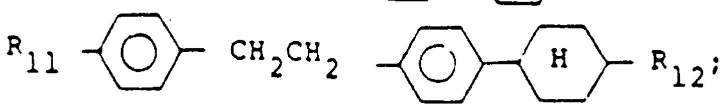 ;

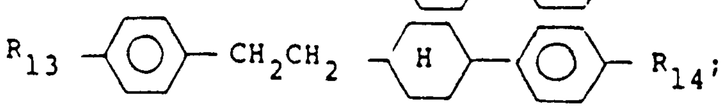 ;

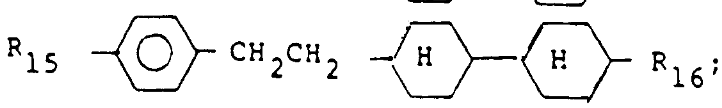 ;

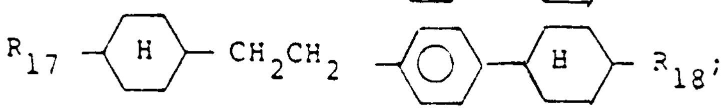 ;

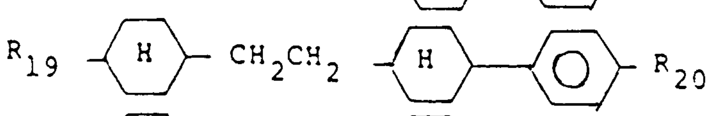 ; ou

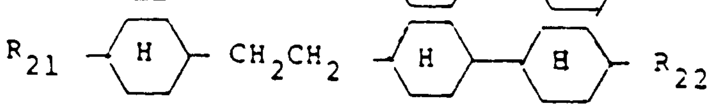 ;

dans lesquelles $R_1$, $R_3$, $R_5$ et $R_7$ peuvent être identiques ou différents et représentent chacun un groupe alkyle en $C_2$-$C_7$,

$R_2$, $R_4$, $R_6$ et $R_8$ peuvent être identiques ou différents et représentent chacun un groupe alkyle en $C_2$-$C_7$, un groupe alcoxy en $C_1$-$C_6$,

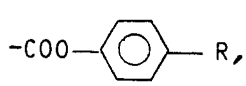

un atome de fluor, un atome de brome ou un groupe cyano,

R représente un groupe alkyle en $C_2$-$C_7$, un atome de fluor ou un atome de brome,

$R_9$, $R_{11}$, $R_{13}$, $R_{15}$, $R_{17}$, $R_{19}$ et $R_{21}$ peuvent être identiques ou différents et représentent chacun un groupe alkyle en $C_2$-$C_7$ ou un groupe alcoxy en $C_1$-$C_6$ et

$R_{10}$, $R_{12}$, $R_{14}$, $R_{16}$, $R_{18}$, $R_{20}$ et $R_{22}$ peuvent être identiques ou différents et représentent chacun un groupe alkyle en $C_2$-$C_7$, un atome de fluor, un atome de chlore, un atome de brome ou un groupe cyano.

**4.** Une composition de liquide cristallin selon les revendications 1 à 3, dans laquelle le composé liquide cristallin du type biscyclohexane répond à la formule :

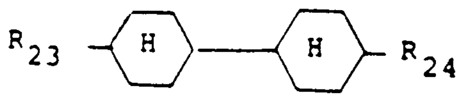

dans laquelle

$R_{23}$ représente un groupe alkyle en $C_2$-$C_7$ et

$R_{24}$ représente un groupe alkyle en $C_2$-$C_7$ ou un groupe cyano.

5. Une composition de liquide cristallin selon l'une quelconque des revendications 1 à 4, dans laquelle le composé liquide cristallin du type ester répond à la formule :

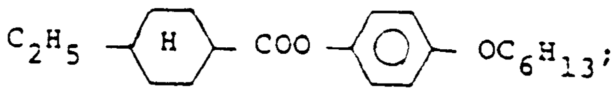

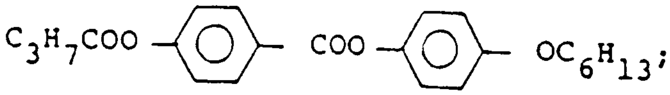

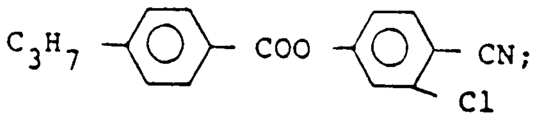

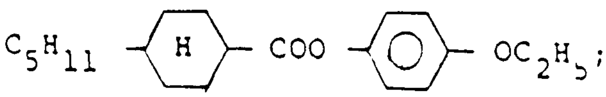

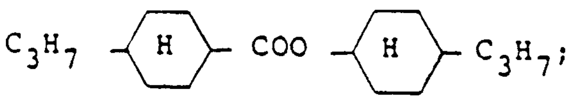

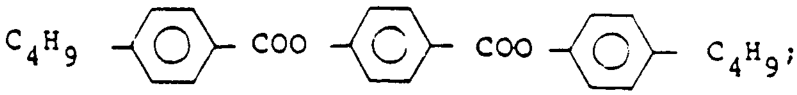

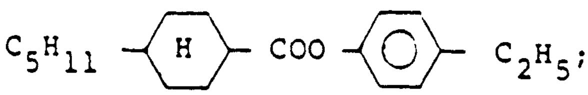

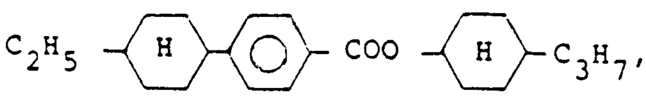 ou

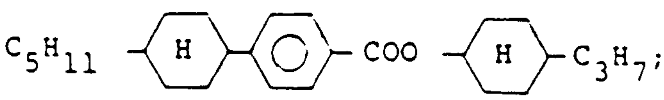

dans lesquelles un atome d'oxygène central du groupe -COO- peut facultativement être remplacé par un atome de soufre.

6. Une composition de liquide cristallin selon l'une quelconque des revendications 1 à 5, dans laquelle le composé liquide cristallin nématique chiral répond à la formule :

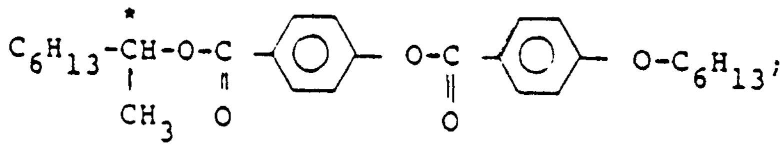

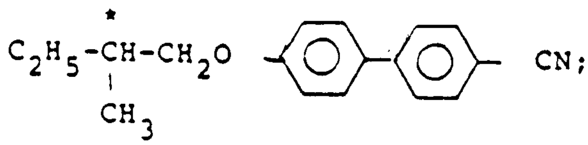

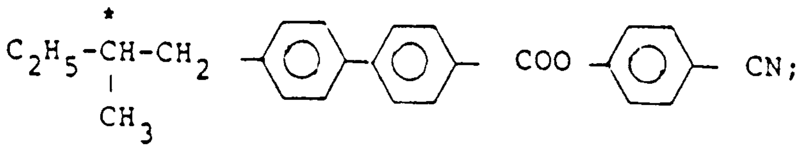

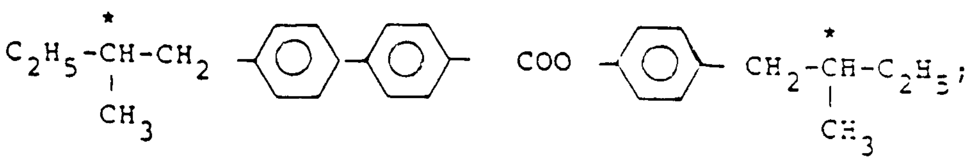

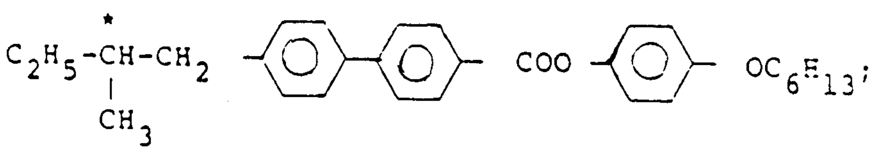

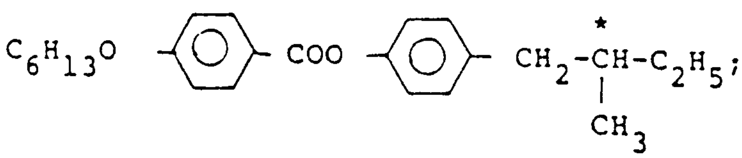

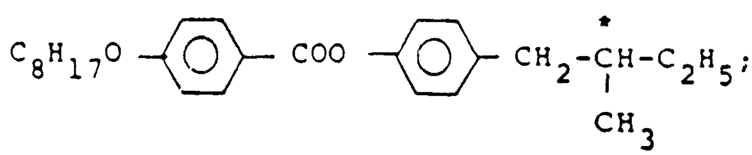

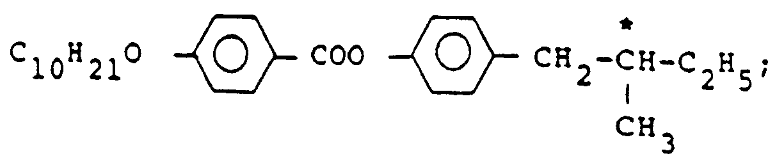

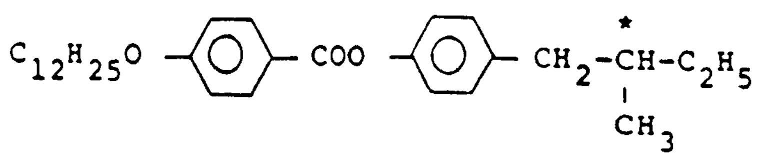

ou

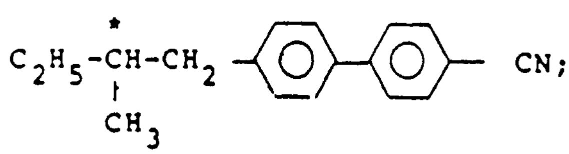

dans lesquelles C* représente un atome de carbone asymétrique.

7. Une composition de liquide cristallin selon l'une quelconque des revendications 2 à 6, dans laquelle le composé liquide cristallin du type éthane est utilisé en quantité de 10 à 70 % en poids par rapport au poids total de la composition de liquide cristallin, de préférence en quantité de 10 à 40 % en poids.

8. Une composition de liquide cristallin selon l'une quelconque des revendications 1 à 7, dans laquelle le composé liquide cristallin du type biscyclohexane est utilisé en quantité de 10 à 60 % en poids par rapport au poids total de la composition de liquide cristallin, de préférence en quantité de 20 à 40 % en poids.

9. Une composition de liquide cristallin selon l'une quelconque des revendications 1 à 8, dans laquelle le composé liquide cristallin nématique chiral est utilisé en quantité de 8 à 40 % en poids par rapport au poids total de la composition de liquide cristallin, de préférence en quantité de 10 à 30 % en poids.

10. Une composition de liquide cristallin selon l'une quelconque des revendications 1 à 9, dans laquelle le composé liquide cristallin du type ester est utilisé en quantité de 15 à 85 % en poids par rapport au poids total de la composition de liquide cristallin, de préférence en quantité de 20 à 55 % en poids.

11. Une composition de liquide cristallin selon l'une quelconque des revendications 1 à 10, qui contient en outre d'autres types de composés liquides cristallins.

12. Une composition de liquide cristallin selon la revendication 11, qui contient d'autres types de composés liquides cristallins choisis parmi les composés liquides cristallins du type biphényle, les composés liquides cristallins du type dioxanne, les composés liquides cristallins du type pyrimidine, les composés liquides cristallins du type cyclohexane-benzène, les composés liquides cristallins du type terphényle et les composés liquides cristallins du type cyclohexane-biphényle et leurs mélanges.

13. Une composition de liquide cristallin selon la revendication 11 ou 12, qui contient un ou plusieurs composés choisis parmi un composé liquide cristallin du type biphényle en quantité de plusieurs unités % à 20 % en poids, avantageusement de 5 à 10 % en poids, un composé liquide cristallin du type dioxanne en quantité de plusieurs unités % à 20 % en poids, de préférence de 3 à 15 % ; un composé liquide cristallin du type pyrimidine en quantité allant jusqu'à 15 % en poids, de préférence jusqu'à 5 ou 10 % en poids, un composé liquide cristallin du type cyclohexane en quantité de plusieurs unités % à 20 % en poids, avantageusement de 3 ou 5 à 20 % en poids et des composés liquides cristallins du type terphényle et du type cyclohexane-biphényle en quantité combinée allant jusqu'à 10 % en poids, tous les pourcentages étant rapportés au poids total de la composition de liquide cristallin.

**Patentansprüche**

1. Flüssigkristallzusammensetzung, welche eine positive, dielektrische Anisotropie aufweist, und welche ein cholesterisch-nematischer Phasenübergangstyp-Flüssigkristall ist, die eine Mischung von einer Estertyp-Flüssigkeitskristallverbindung und einer chiralen nematischen Flüssigkeitskristallverbindung enthält, und der zumindest eine Bicyclohexantyp-Flüssigkristallverbindung zugefügt ist.

2. Flüssigkristallzusammensetzung nach Anspruch 1, welche zusätzlich eine Ethantyp-Flüssigkristallverbindung enthält.

3. Flüssigkristallzusammensetzung nach Anspruch 2, in welcher die Ethantyp-Flüssigkristallverbindung die Formel hat :

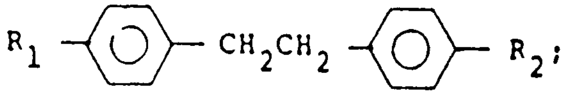

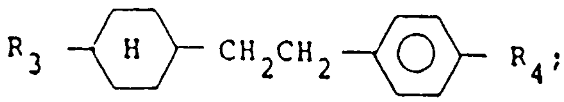

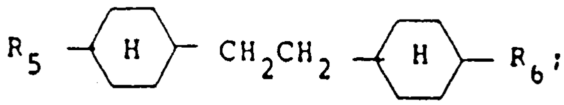

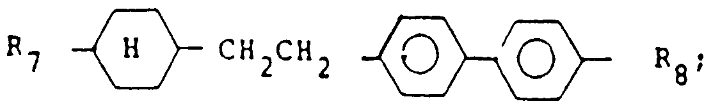

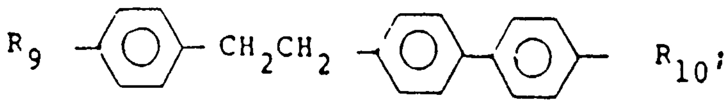

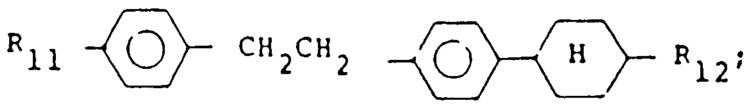

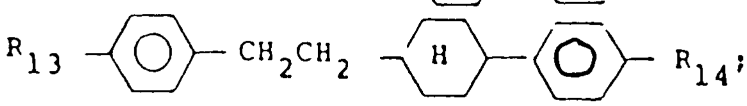

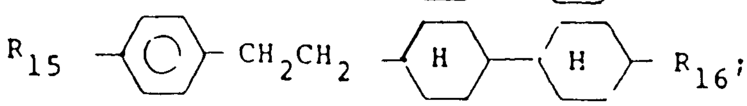

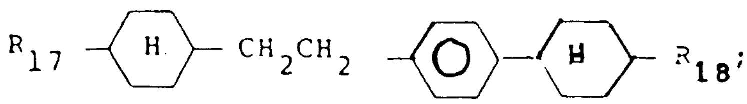

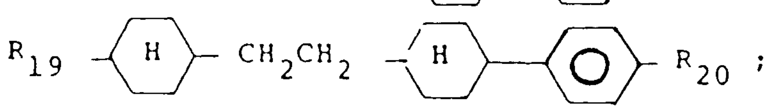

or

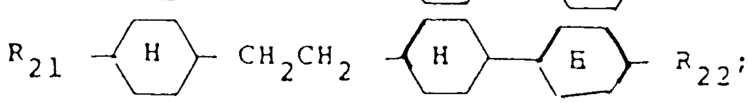

in welcher $R_1$, $R_3$, $R_5$ und $R_7$ gleich oder verschieden sein können und jeder eine Alkylgruppe von 2 bis 7 Kohlenstoffatomen repräsentiert,

$R_2$, $R_4$, $R_6$ und $R_8$ gleich oder verschieden sein können und jeder eine Alkylgruppe von 2 bis 7 Kohlenstoffatomen und eine Alkoxygruppe von 1 bis 6 Kohlenstoffatomen,

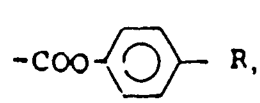

ein Fluoratom, ein Bromatom, oder eine Cyanogruppe repräsentiert,

R eine Alkylgruppe von 2 bis 7 Kohlenstoffatomen, ein Fluoratom oder ein Bromatom repräsentiert,

$R_9$, $R_{11}$, $R_{13}$, $R_{15}$, $R_{17}$, $R_{19}$ und $R_{21}$ gleich oder verschieden sein können und jeder eine Alkylgruppe von 2 bis 7 Kohlenstoffatomen oder eine Alkoxygruppe von 1 bis 6 Kohlenstoffatomen repräsentiert und,

$R_{10}$, $R_{12}$, $R_{14}$, $R_{16}$, $R_{18}$, $R_{20}$ und $R_{22}$ gleich oder verschieden sein können und jeder eine Alkylgruppe von 2 bis 7 Kohlenstoffatomen, ein Fluoratom, ein Chloratom, ein Bromatom oder eine Cyanogruppe repräsentiert.

**4.** Flüssigkristallzusammensetzung nach Anspruch 1 bis 3, in welcher die Bicyclohexantyp-Flüssigkristallverbindung die Formel hat :

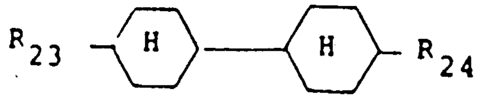

in welcher

$R_{23}$ eine Alkylgruppe von 2 bis 7 Kohlenstoffatomen repräsentiert und

$R_{24}$ eine Alkylgruppe von 2 bis 7 Kohlenstoffatomen oder eine Cyanogruppe repräsentiert.

**5.** Flüssigkristallzusammensetzung nach einem der Ansprüche 1 bis 4, in welcher die Estertyp-Flüssigkristallverbindung folgende Formel hat :

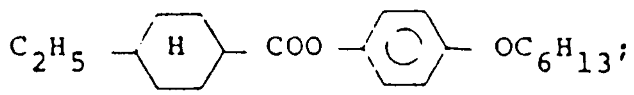

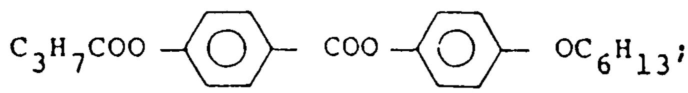

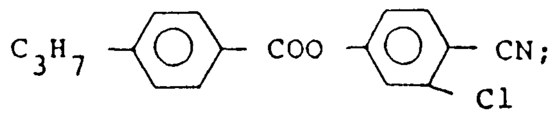

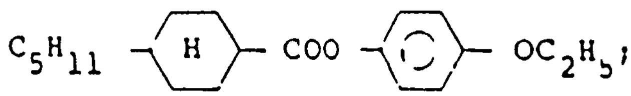

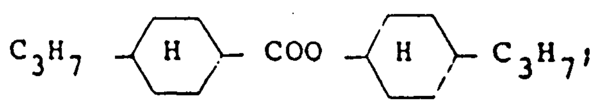

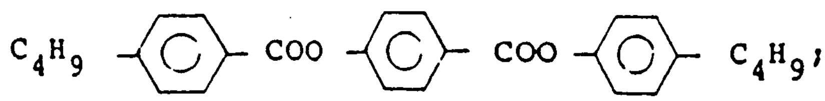

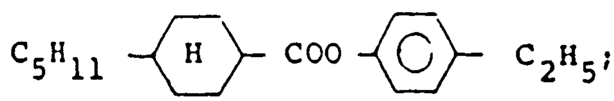

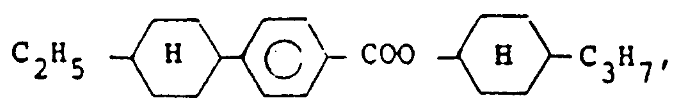
or;

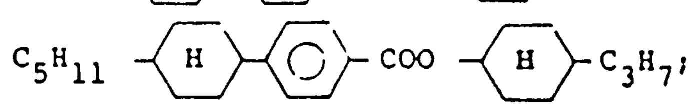

in welcher ein Sauerstoffatom von der Zentralgruppe -COO-wahlweise durch ein Schwefelatom ersetzt werden kann.

**6.** Flüssigkristallzusammensetzung nach einem der Ansprüche 1 bis 5, in welcher die chirale, nematische Flüssigkristallverbindung die Formel hat :

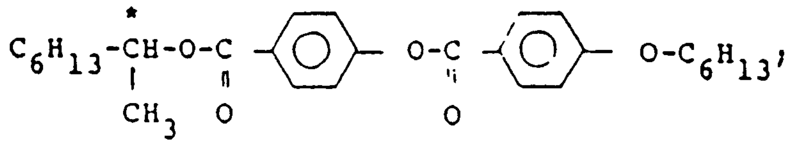

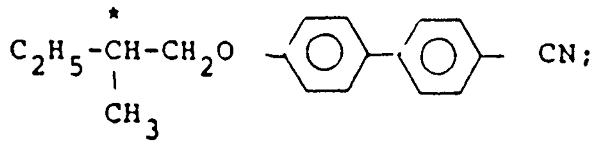

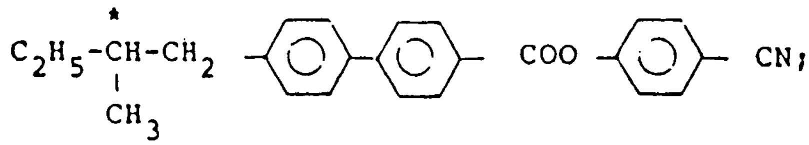

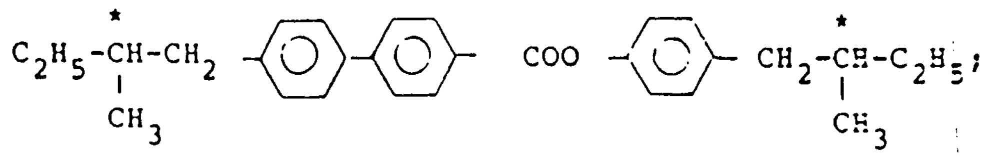

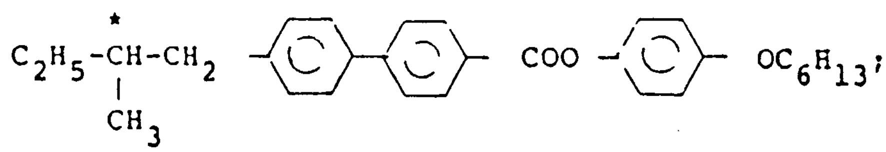

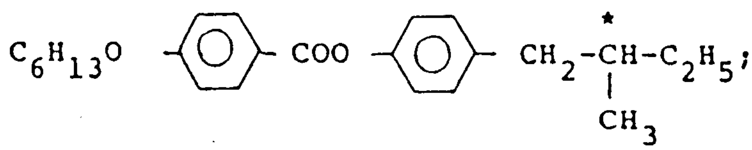

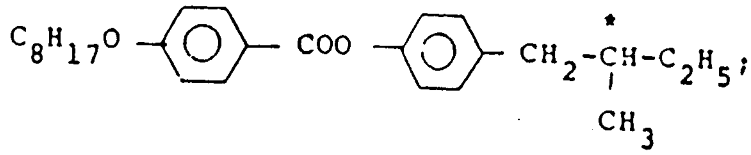

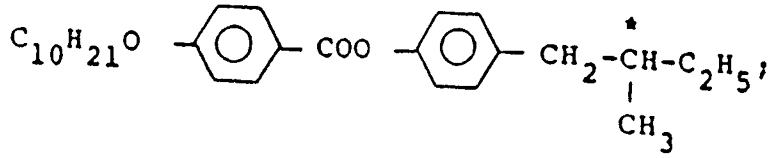

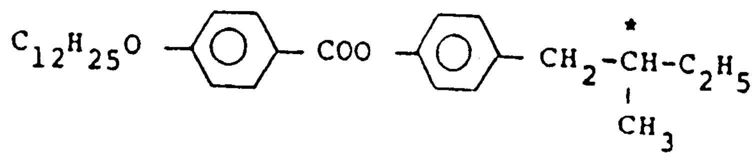

; or

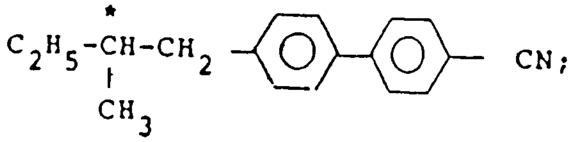

in welcher C* ein asymetrisches Kohlenstoffatom bedeutet.

**7.** Flüssigkristallzusammensetzung nach einem der Ansprüche 2 bis 6, in welcher die Ethantyp-Flüssigkristallverbindung in einer Menge von 10% bis 70% Gewichtsanteil bezogen auf das Gesamtgewicht der Flüssigkristallzusammensetzung, vorzugsweise in einer Menge von 10 bis 40% Gewichtsanteil, verwendet wird.

**8.** Flüssigkristallzusammensetzung nach einem der Ansprüche 1 bis 7, in welcher die Bicylohexantyp-Flüssigkristallverbindung in einer Menge von 10% bis 60% Gewichtsanteil bezogen auf das Gesamtgewicht der Flüssigkristallzusammensetzung, vorzugsweise in einer Menge von 20 bis 40% Gewichtsanteil verwendet wird.

**9.** Flüssigkristallzusammensetzung nach einem der Ansprüche 1 bis 8, in welcher die chirale, nematische Flüssigkristallverbindung in einer Menge von 8% bis 40% Gewichtsanteil bezogen auf das Gesamtgewicht der Flüssigkristallzusammensetzung, vorzugsweise in einer Menge von 10 bis 30% Gewichtsanteil verwendet wird.

**10.** Flüssigkristallzusammensetzung nach einem der Ansprüche 1 bis 9, in welcher die Estertyp-Flüssigkristallverbindung in einer Menge von 15% bis 85% Gewichtsanteil bezogen auf das Gesamtgewicht der Flüssigkristallzusammensetzung, vorzugsweise in eine Menge von 20 bis 55% an Gewichtsanteil verwendet wird.

**11.** Flüssigkristallzusammensetzung nach einem der Ansprüche 1 bis 10, in welcher andere Typen von Flüssigkristallverbindungen zusätzlich enthalten sind.

**12.** Flüssigkristallzusammensetzung nach Anspruch 11, in welcher andere Typen von Flüssigkristallverbindungen enthalten sind, ausgewählt aus der Gruppe, die sich zusammensetzt aus Biphenyltyp -, Dioxantyp-, Pyrimidintyp-, Cyclohexan-Benzoltyp-, Terphenyltyp- und Cyclohexan-Biphenyltyp-Flüssigkeitskristallverbindungen und Mischungen davon.

**13.** Flüssigkristallzusammensetzung nach Anspruch 11 oder nach Anspruch 12, welche ein oder mehrere Verbindungen enthält, ausgewählt aus einer Biphenyltyp-Flüssigkristallverbindung in einer Menge von einigen Prozent bis zu 20% Gewichtsanteil, geeignet von 5 oder 10% bis 20% Gewichtsanteil, einer Dioxantyp-Verbindung in einer Menge von einigen Prozent bis 20% Gewichtsanteil, vorzugsweise 3 bis 15% Gewichtsanteil, einer Pyrimidintyp-Flüssigkristallverbindung in einer Menge von bis zu 15% Gewichtsanteil, vorzugsweise bis zu 5 oder 10% Gewichtsanteil, einer Cyclohexantyp-Flüssigkristallverbindung in einer Menge von einigen Prozent bis zu 20% Gewichtsanteil, geeignet von 3 oder 5 bis 20% Gewichtsanteil, und Terphenyl- und/oder Cyclohexan-Biphenyltyp-Flüssigkristallverbindungen in einer kombinierten Menge von bis zu 10% Gewichtsanteil, wobei alle Prozentangaben auf das Gesamtgewicht der Flüssigkristallzusammensetzung bezogen sind.

Fig. 1

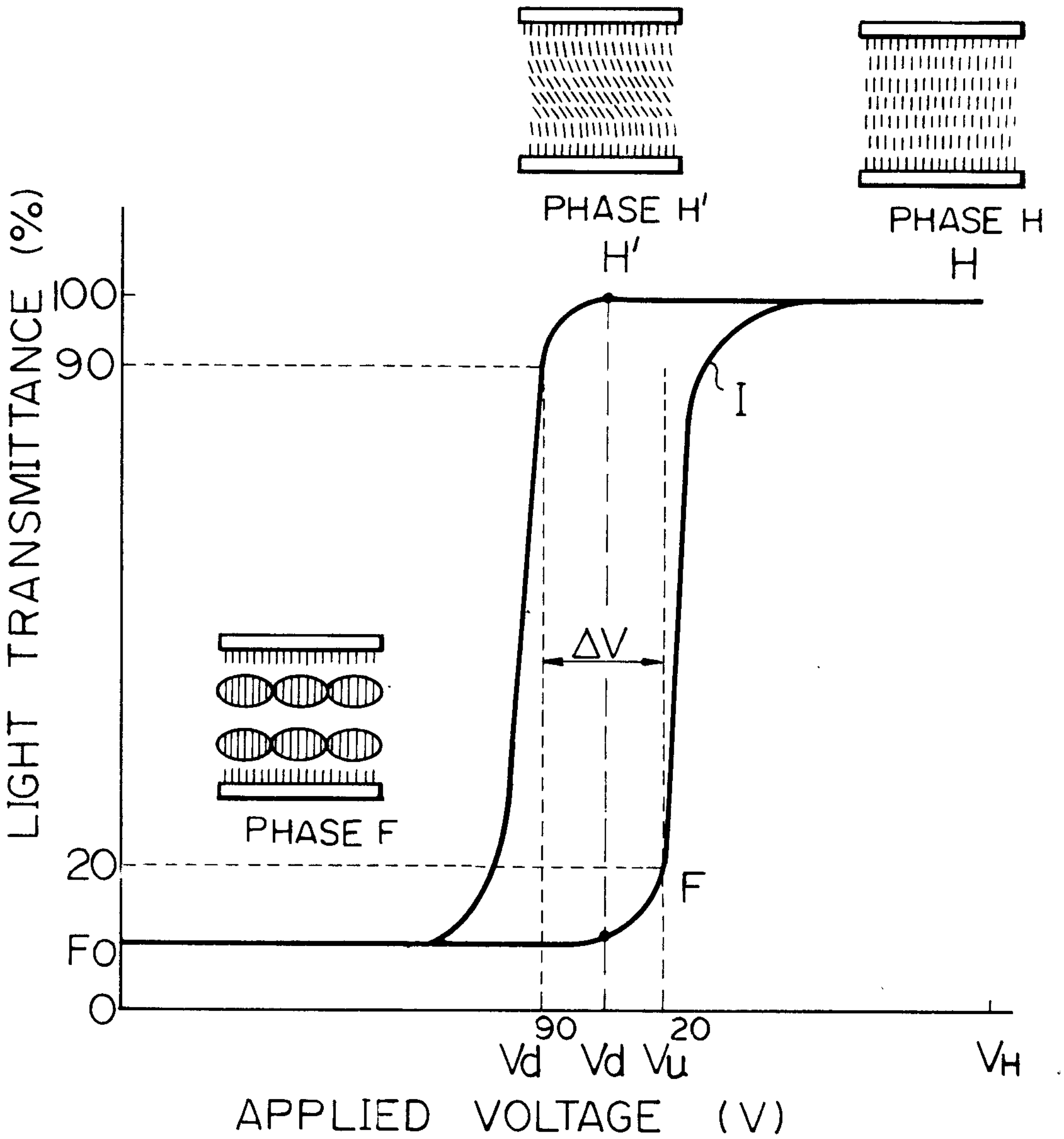
PHASE H'
PHASE H
H'
H
LIGHT TRANSMITTANCE (%)
100
90
20
Fo
0
I
ΔV
F
PHASE F
90
Vd
Vd
20
Vu
VH
APPLIED VOLTAGE (V)

Fig. 2a

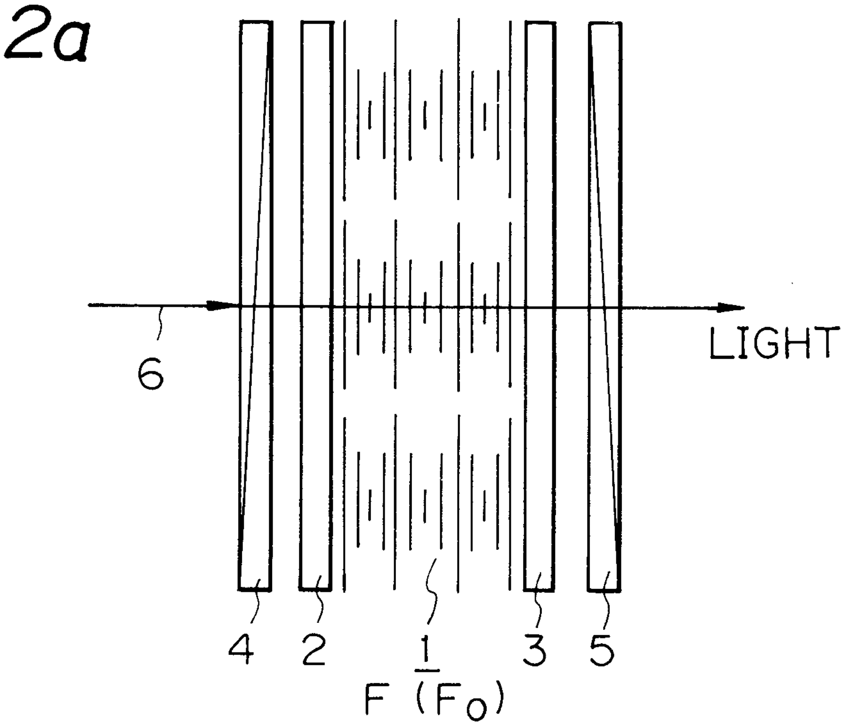


Fig. 2b

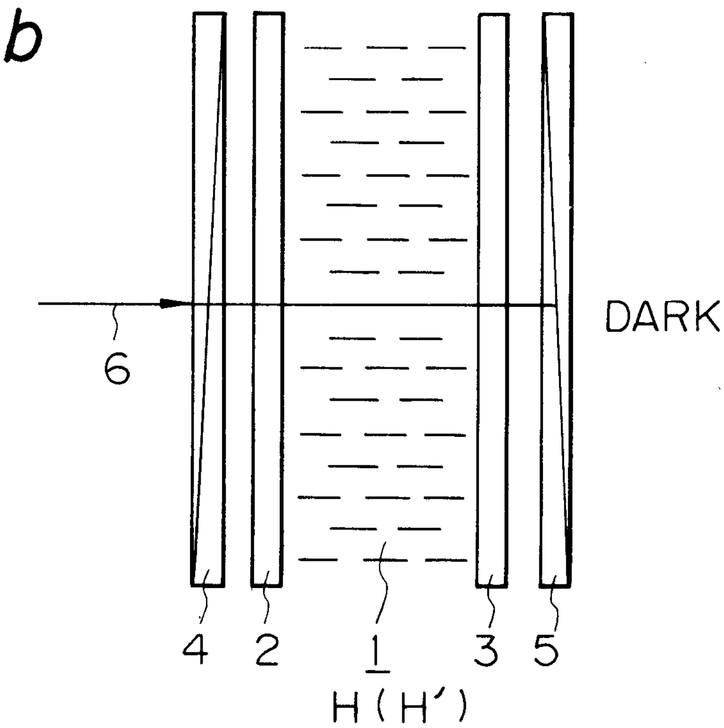

Fig. 3a

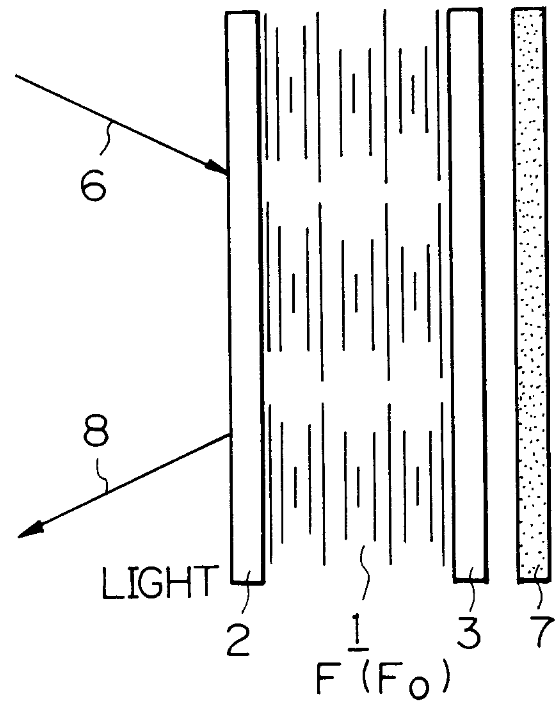


Fig. 3b

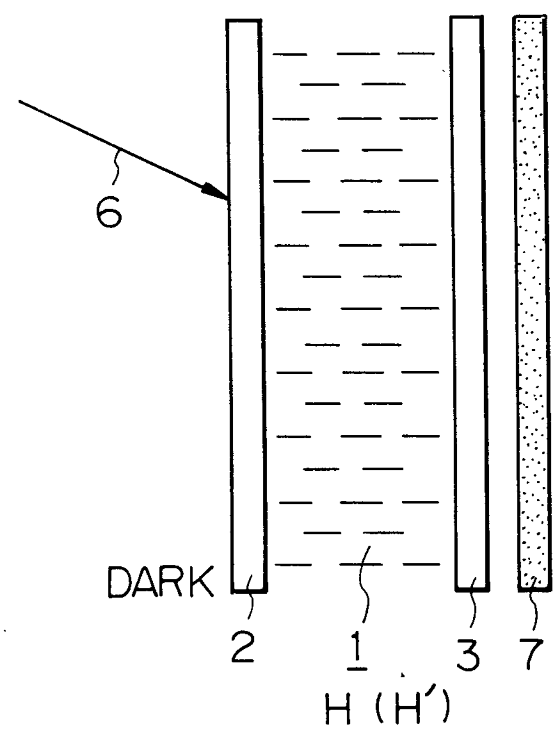

Fig. 4a

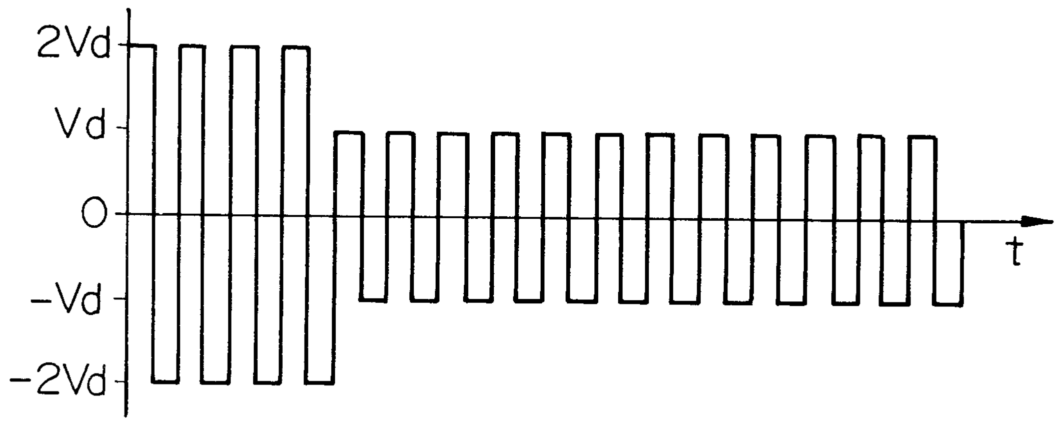


CHOLESTERIC→NEMATIC PHASE TRANSITION

Fig. 4b

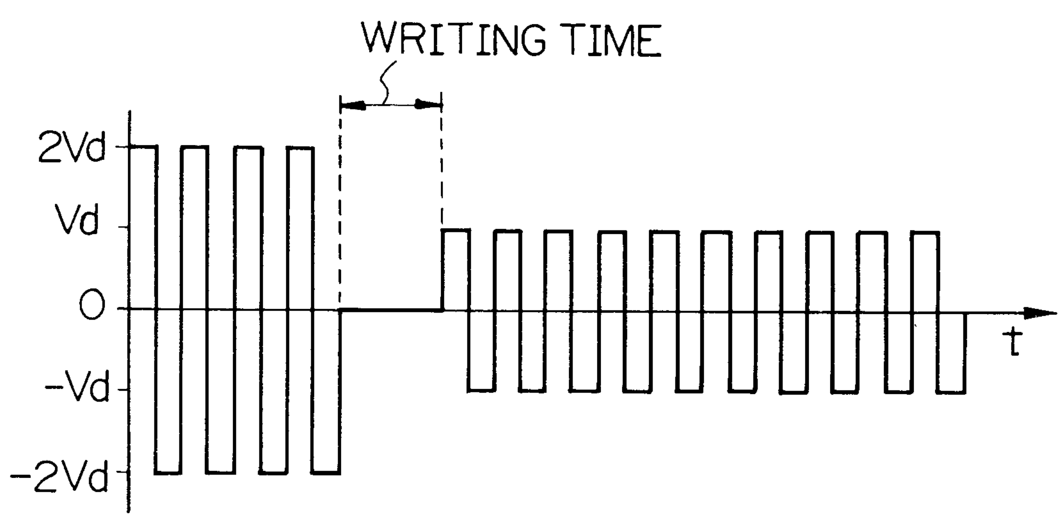


NEMATIC→CHOLESTERIC PHASE TRANSITION

Fig. 5

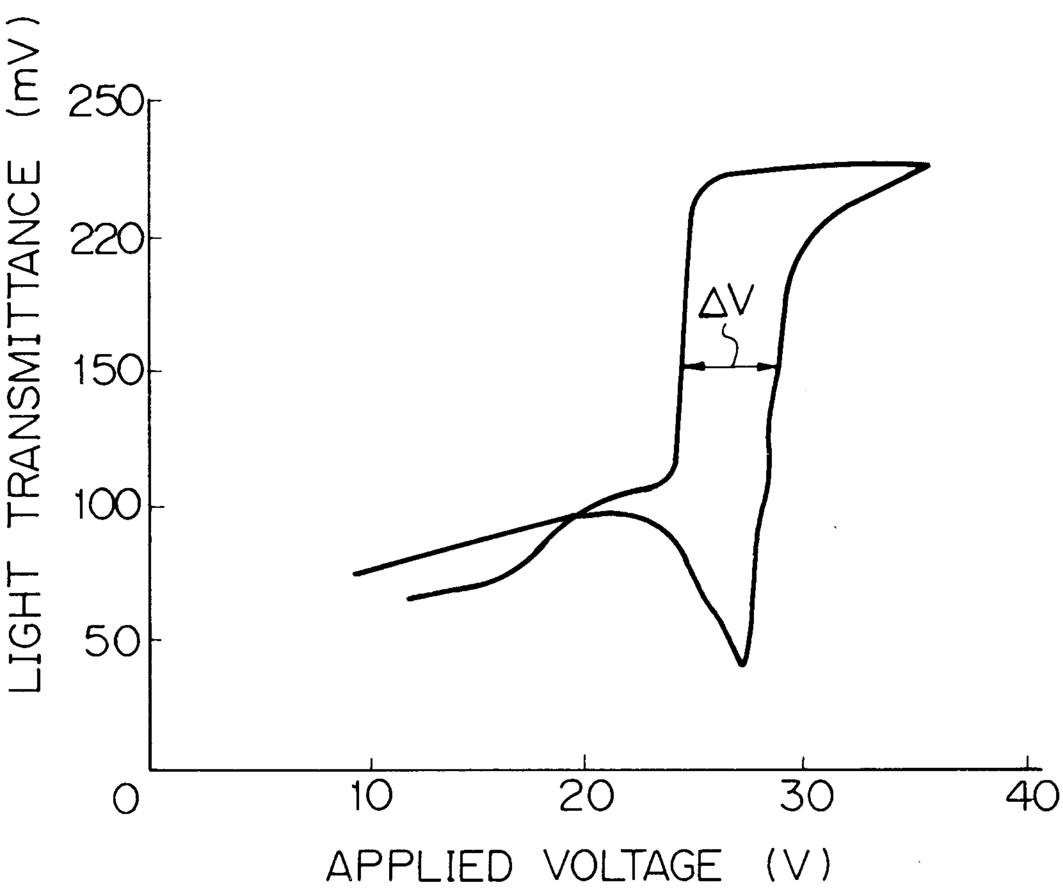
LIGHT TRANSMITTANCE (mV)
250
220
150
100
50
0
10
20
30
40
APPLIED VOLTAGE (V)
ΔV